(19) Europäisches Patentamt
European Patent Office
Office européen des brevets

(11) **EP 1 907 798 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
***G01D 5/245*** *(2006.01)*

(21) Anmeldenummer: **06776295.5**

(22) Anmeldetag: **19.07.2006**

(86) Internationale Anmeldenummer:
**PCT/EP2006/007083**

(87) Internationale Veröffentlichungsnummer:
**WO 2007/012419 (01.02.2007 Gazette 2007/05)**

(54) **ELEKTROMOTOR MIT EINEM ABSOLUTWERT-DREHWINKELSENSOR, UND VERFAHREN ZUR ERZEUGUNG EINES DREHWINKEL-ABSOLUTWERTS**

ELECTRIC MOTOR WITH AN ABSOLUTE ENCODER, AND METHOD FOR GENERATING AN ABSOLUTE VALUE FOR AN ANGLE OF ROTATION

MOTEUR ELECTRIQUE AYANT UN CAPTEUR D'ANGLE DE ROTATION A VALEUR ABSOLUE ET PROCEDE POUR PRODUIRE UN CAPTEUR D'ANGLE DE ROTATION A VALEUR ABSOLUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.07.2005 DE 102005036131**

(43) Veröffentlichungstag der Anmeldung:
**09.04.2008 Patentblatt 2008/15**

(73) Patentinhaber: **ebm-papst St. Georgen GmbH & Co. KG**
**78112 St. Georgen (DE)**

(72) Erfinder:
• **RUDEL, Christian**
**78126 Königsfeld (DE)**

• **HORNBERGER, Jörg**
**72280 Dornstetten (DE)**
• **SCHÄUBLE, Michael**
**78052 VS-Villingen (DE)**
• **KISCH, Michael**
**78112 St. Georgen (DE)**

(74) Vertreter: **Raible, Tobias et al**
**Raible & Raible**
**Schoderstrasse 10**
**70192 Stuttgart (DE)**

(56) Entgegenhaltungen:
**EP-A- 1 016 852      EP-A2- 1 279 929**
**US-A- 5 880 683**

EP 1 907 798 B1

**Beschreibung**

Die Erfindung betrifft einen Elektromotor mit einem Absolutwert-Drehwinkelsensor, und sie betrifft ein Verfahren zur Erzeugung von Drehwinkel-Absolutwerten im Betrieb eines solchen Motors.

Absolutwert-Drehwinkelsensoren, die man auch als Encoder bezeichnet, sind im allgemeinen sehr teuer.

Es ist eine Aufgabe der Erfindung, einen neuen Elektromotor mit einem Absolutwert-Drehwinkelsensor, sowie ein Verfahren zur Erzeugung eines Drehwinkel-Absolutwerts, bereit zu stellen.

Diese Aufgabe wird gelöst durch einen Absolutwert-Drehwinkelsensor gemäß Patentanspruch 1. Durch die Anordnung von zwei analogen Sensoren, mit deren Hilfe am betreffenden Sensor eine dort wirksame vektorielle Komponente des Magnetflusses des Sensormagneten erfasst wird, welche in einer vorgegebenen Richtung relativ zum betreffenden Sensor verläuft, ist es möglich, aus den Rotorstellungssignalen dieser beiden Sensoren, welche in einem vorgegebenen Abstand voneinander im Bereich des drehwinkelabhängigen Magnetflusses am Stator angeordnet sind, einen Absolutwert für den augenblicklichen Drehwinkel des Sensormagneten zu erzeugen.

Eine andere Lösung der gestellten Aufgabe ergibt sich durch ein Verfahren gemäß Anspruch 28, Ein solches Verfahren zur Erzeugung eines Drehwinkel-Absolutwerts ist bei einer Vielzahl von Motortypen verwendbar und ermöglicht bei einem dreiphasigen Motor die Erzeugung eines weitgehend konstanten Drehmoments, ohne dass hierzu teure Sensoren für den Absolutwert des Drehwinkels benötigt werden.

Zur Vermeidung von Längen wird auf den Inhalt folgender Literaturstellen Bezug genommen:

   a) WO 2004/001 341 A1
   b) DE 10 2005 002 830 A1
   c) EP-A-1 016 852
   d) US-A-5 880 683

Beide Schriften zeigen die Signalverarbeitung bei sinusförmigen Signalen, insbesondere die Normierung (Standardisierung) auf gleiche Amplitude und gleichen DC-Offset. Dies ist sowohl mit analogen Schaltungen wie mit digitalen Verfahren in gleicher Weise möglich.

Weitere Einzelheiten und vorteilhafte Weiterbildungen der Erfindung ergeben sich aus dem im folgenden beschriebenen und in den Zeichnungen dargestellten, in keiner Weise als Einschränkung der Erfindung zu verstehenden Ausführungsbeispielen, sowie aus den Unteransprüchen. Es zeigen:

| | |
|---|---|
| Fig. 1 | ein Ausführungsbeispiel eines erfindungsgemäßen Absolutwert-Drehwinkelsensors, |
| Fig. 1A und 1B | vergrößerte Darstellungen der Einzelheit IA der Fig. 1, |
| Fig. 2 | einen Längsschnitt durch ein Ausführungsbeispiel eines erfindungsgemäßen Außenläufermotors, |
| Fig. 3 | einen Sensor magneten, bei dem die Pole homogen magnetisiert sind, und die resultierende magnetische Flussdichte, |
| Fig. 4 | einen Sensormagneten mit einer sinusförmigen Magnetisierung und die resultierende magnetische Flussdichte, |
| Fig. 5 | eine Draufsicht auf eine bevorzugte Ausführung eines Sensormagnetrings, |
| Fig. 6 | einen Schnitt durch den Sensormagnetring entlang der Linie VI-VI aus Fig. 5, |
| Fig. 7 | eine Darstellung des Verlaufs der magnetischen Feldlinien bei einem Sensormagneten mit sinusförmigem Flussverlauf, |
| Fig. 8 | ein Flussdiagramm für die Auswertung der Sensorsignale, |
| Fig. 9 | eine Sensoranordnung mit tangential angeordneten Rotorstellungssensoren, |
| Fig. 10 | eine Darstellung der Rotorstellungssignale bei einer Anordnung gemäß Fig. 9, |
| Fig. 11 | eine Darstellung des berechneten Drehwinkels aus den Rotorstellungssignalen gemäß Fig. 10, |
| Fig. 12 | eine Sensoranordnung mit zwei symmetrisch in einer gemeinsamen Ebene angeordneten Rotorstellungssensoren, |
| Fig. 13 | eine schematische Darstellung einer Superposition zweier sinusförmiger Signale, |
| Fig. 14 | eine Darstellung der Rotorstellungssignale bei einer Anordnung gemäß Fig. 12, |
| Fig. 15 | eine Darstellung des berechneten Drehwinkels aus den Rotorstellungssignalen gemäß Fig. 14, |
| Fig. 16 | eine Sensoranordnung mit zwei unsymmetrisch in einer Ebene angeordneten Rotorstellungssensoren, und |
| Fig. 17 | eine Darstellung des berechneten Drehwinkels aus den Rotorstellungssignalen gemäß Fig. 16. |

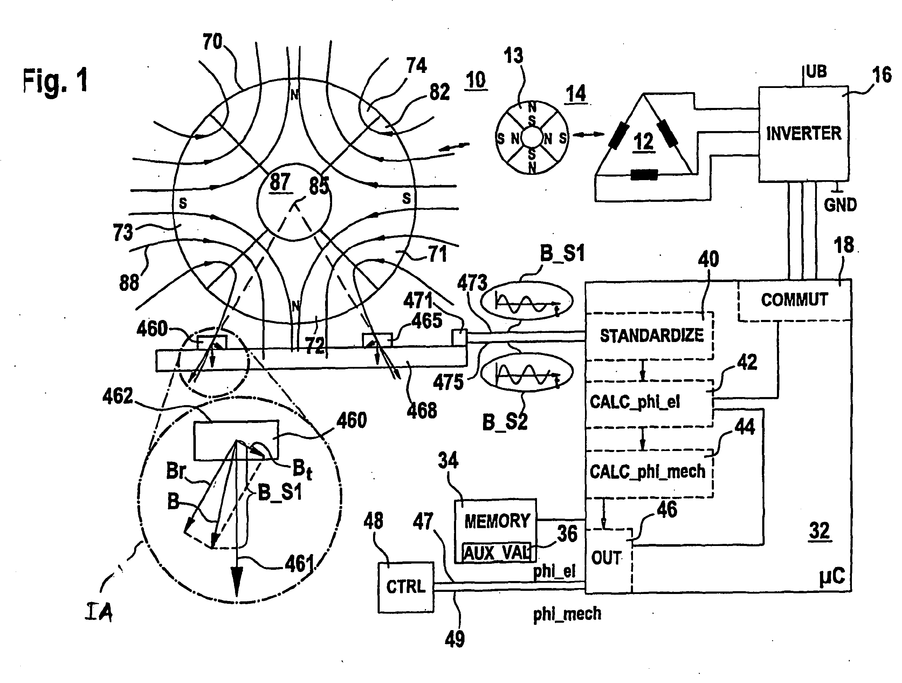

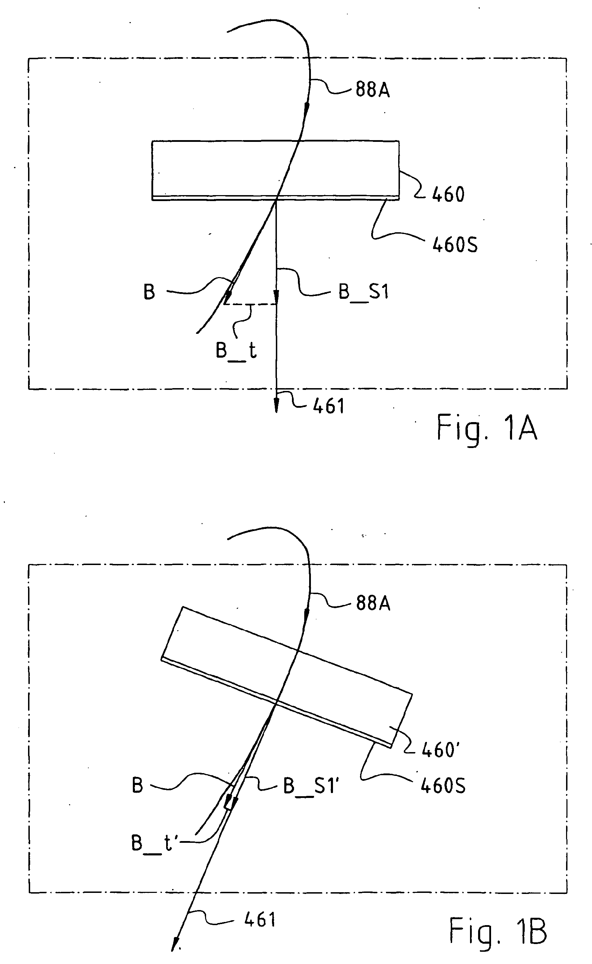

**Fig. 1** zeigt einen Elektromotor 10 mit einem Stator 12 und einem mit diesem in Wechselwirkung stehenden Rotor 14 mit einem Rotormagneten 13.

Der Rotor 14 wird von einer Endstufe INVERTER 16 in Abhängigkeit von Kommutierungssignalen einer Vorrichtung COMMUT 18 angesteuert. Der Motor 10 kann an eine Betriebsspannung UB angeschlossen werden.

Der Elektromotor 10 weist einen Mikrocontroller (Mikroprozessor) µC 32 und einen diesem zugeordneten Speicher MEMORY 34 auf, in dem Hilfswerte AUX_VAL 36 gespeichert sind. Der µC 32 weist die Module STANDARDIZE 40, CALC_phi_el 42 und CALC_phi_mech 44 sowie ein Ausgabemodul OUT 46 auf, über das ein Absolutwert phi_el für die elektrische Drehstellung des Rotormagneten 13 im Bereich [0° el bis 360° el.] und/oder ein Absolutwert phi_mech für die mechanische Drehstellung des Rotors 14 im Bereich [0° mech ... 360° mech] ausgegeben werden kann, beispielsweise über Datenleitungen 47 und 49.

Ein vierpoliger permanentmagnetischer Sensormagnet 82 ist auf einer Welle 87 des Rotors 14 angeordnet, deren Drehachse mit 85 bezeichnet ist. Zwei analoge Rotorstellungssensoren 460, 465 sind auf einer Leiterplatte 468 in einer gemeinsamen Ebene angeordnet. Die von den Sensoren 460, 465 gemessenen Rotorstellungssignale B_S1 und B_S2 werden beispielsweise über einen Stecker 471 und die Leitungspaare 473 bzw. 475 dem µC 32 zugeführt, damit dieser aus den Rotorstellungssignalen B_S1 und B_S2 den elektrischen Drehwinkel phi_el. und/oder den mechanischen Drehwinkel phi_mech ermitteln kann. In einer bevorzugten Ausführungsform sind der µC 32 und die Endstufe 16 ebenfalls zumindest teilweise auf der Leiterplatte 468 angeordnet, auf der auch die Rotorstellungssensoren 460, 465 angeordnet sind.

**Arbeitsweise**

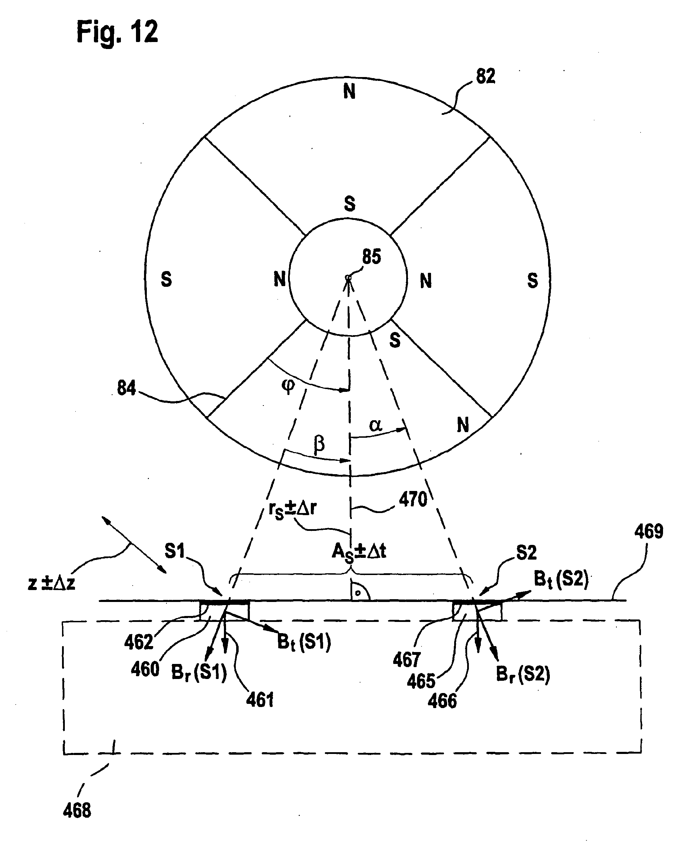

Der Sensormagnet 82 ist ringförmig mit einer im Wesentlichen zylindrischen Oberfläche 70 ausgebildet, und er hat vier Pole 71, 72, 73, 74. Abhängig vom Drehwinkel phi (Fig. 12) erzeugt er ein im Wesentlichen sinusförmiges Magnetfeld 88 bzw. eine im Wesentlichen sinusförmige magnetische Flussdichte B. Die dargestellte Magnetisierung des Sensormagneten 82 wird als polorientiert bzw. polorientiert-lateral bezeichnet, und die Magnetisierung innerhalb eines Pols ist nicht homogen, sondern sie ändert abhängig vom Ort die Richtung und die Intensität, während beispielsweise bei einem diametral magnetisierten Magneten die Magnetisierung innerhalb eines Poles homogen ist und immer in dieselbe Richtung weist.

In der vergrößerten Darstellung des analogen Sensors 460 ist die so genannte sensitive Fläche 462 zu sehen, in der die Messung stattfindet. Dabei erfasst der Sensor 460 nur den Anteil der vektoriellen magnetischen Flussdichte B, welcher in einer Richtung auf die sensitive Fläche 462 zeigt, die der Richtung der Normalen 461 auf dieser sensitiven Fläche 462 entspricht. Da der Sensor 460 nicht tangential zum Sensormagnet 82 angeordnet ist, weil die Normale 461 nicht die Drehachse 85 des Sensormagneten 82 schneidet, erfasst er - anders als bei üblichen Anordnungen - neben dem radialen Anteil B_r der magnetischen Flussdichte B auch den tangentialen Anteil B_t der magnetischen Flussdichte B. Der Anteil der magnetischen Flussdichte B, der in Richtung der Normalen 461 zeigt, ist mit B_S1 bezeichnet, und dieser Anteil wird vom analogen Sensor 460 (S1) in Form eines analogen Signals gemessen.

**Fig. 1A** zeigt eine vergrößerte Darstellung des Ausschnitts 1A der Fig. 1. Die Bezugszeichen sind dieselben wie in Fig. 1. Der magnetfeldempfindliche Sensor 460 hat eine - nur schematisch dargestellte - magnetfeldsensitive Schicht 460s, welche nur magnetische Flüsse B_S1 messen kann, die senkrecht zur Schicht 460s verlaufen, also in Richtung der Normalen 461, welche senkrecht zur Schicht 460s verläuft.

**Fig. 1B** zeigt eine analoge Darstellung, wobei aber der Sensor 460' gegenüber Fig. 1A um einen Winkel von etwa 20° im Uhrzeigersinn verdreht dargestellt ist. Die Normale 461 ist ebenfalls eingetragen. Der zu messende magnetische Fluss 88A ist in beiden Fällen derselbe und hat den gleichen Verlauf und die gleiche Magnetflussdichte.

Bei Fig. 1A wird durch den Sensor 460 ein Wert B_S1 gemessen, welcher der vektoriellen Komponenten des magnetischen Flusses B entspricht, die in Richtung der Normalen 461 verläuft. Es ergibt sich eine relativ große tangentiale Komponente B_t.

Bei Fig. 1B verläuft der Magnetfluss 88A etwa senkrecht zur magnetfeldsensitiven Schicht 460s, d.h. der Betrag des Vektors B unterscheidet sich kaum vom gemessenen Wert B_S1', und die tangentiale Komponente B_t' hat angenähert den Wert 0.

Bei Fig. 1B erhält man also einen höheren Messwert B_S1' als bei Fig. 1A, wo ein kleinerer Wert B_S1 gemessen wird, obwohl das magnetische Feld 88A in beiden Fällen identisch ist. Das ist eine Folge davon, dass solche magnetfeldempfindlichen Sensoren 460 nur die vektorielle magnetische Feldkomponente messen können, die in Richtung ihrer Normalen 461 auftritt, wobei die Komponenten B_t bzw. B_t', die parallel zur Schicht 460s verlaufen, nur indirekten Einfluss auf das Messergebnis haben. In Fig. 1B ist die Komponente B_t' nämlich sehr klein und beeinflusst folglich die Größe von B_S1' kaum, während bei Fig. 1A die Komponente B_t größer ist und folglich dort B_S1 einen kleineren Wert hat.

In der vergrößerten Darstellung des Rotorstellungssensors 460 ist die so genannte sensitive Fläche 462 zu sehen, in der die Messung stattfindet. Dabei detektiert der Rotorstellungssensor 460 nur den Anteil der vektoriellen magnetischen Flussdichte B, der in Richtung der Normalen 461 auf der sensitiven Fläche 462 zeigt. Da der Rotorstellungssensor 460 nicht tangential zum Sensormagneten 82 angeordnet ist, detektiert er anders als bei üblichen Anordnungen neben dem radialen Anteil B_r der magnetischen Flussdichte B auch den tangentialen Anteil B_t der magnetischen Flussdichte B. Der Anteil der magnetischen Flussdichte B, der in Richtung der Normalen 461 zeigt, ist mit B_S1 bezeichnet, und dies entspricht dem von dem Rotorstellungssensor 460 (S1) gemessenen Signal.

Trotz der nicht tangentialen Anordnung der Rotorstellungssensoren 460 und 465 ergeben sich bei einem Sensormagneten 82 mit sinusförmigem Feldverlauf auch sinusförmige Signale B_S1 und B_S2, welche in Abhängigkeit von der geometrischen Anordnung der Rotorstellungssensoren 460 und 465 eine Phasendifferenz aufweisen.

Die Rotorstellungssignale B_S1 und B_S2 werden dem µC 32 zugeführt, und in einem Softwaremodul STANDARDIZE 40 erfolgt - sofern notwendig - eine Normierung der Rotorstellungssignale B_S1 und B_S2.

Anschließend wird aus den (normierten) Rotorstellungssignalen B_S1 und B_S2 in dem Modul CALC_phi_el 42 ein Absolutwert phi_el für die elektrische Umdrehung des Sensormagneten 82 und - da dieser fest mit dem Rotor 14 verbunden ist - des Rotormagneten berechnet. Da der Sensormagnet nicht mehr Sensorpole (SP = 4) aufweist als der Rotormagnet 14 Rotorpole (RP = 4), kann innerhalb einer elektrischen Umdrehung (360° el. = 180° mech.) des Rotors 14 jedem Winkel ein eindeutiger Wert phi_el zugeordnet werden. Die eindeutige Zuordnung der Werte und die entsprechenden Werte bleiben auch nach einem Aus- und Einschalten im Rahmen der Genauigkeit der Anordnung erhalten. Zur Berechnung des Werts phi_el wird in dem Modul CALC_phi_el 42 bevorzugt auf den nichtflüchtigen Speicher (z.B. ROM, EEPROM) zugegriffen, und es werden aus diesem Hilfswerte AUX_VAL zur Berechnung geladen. Gleiches gilt für das Modul CALC_phi_mech 44.

Bei einer Ausgestaltung des Sensormagneten mit SP = 2 Sensorpolen entspricht der Winkel phi_el sogar einem Absolutwert phi_mech für die mechanische Umdrehung (360° mech.), und jedem Drehwinkel des Rotors 14 kann unabhängig von der Polzahl RP des Rotormagneten 14 ein eindeutiger Wert phi_mech zugeordnet werden.

Bei dem Sensormagneten 82 mit vier Polen (SP = 4) durchläuft der Wert phi_el dagegen bei jeder mechanischen Umdrehung des Rotors zweimal den Wertebereich (0° ... 360°), so dass direkt nach dem Einschalten nicht festgelegt ist, ob sich der Motor beim mechanischen Drehwinkel x° mech. oder aber bei x° + 180° mech. befindet. Hierfür müsste der Anfangszustand bekannt sein. Für viele Anwendungen ist es jedoch ausreichend, wenn nach dem Start der elektrische Winkel phi_el eindeutig als Absolutwert bestimmbar ist. Das Modul CALC_phi_mech 44 ermittelt einen Wert phi_mech für den Drehwinkel. Bei Sensormagneten mit einer Sensorpolzahl SP, welche größer als die Rotorpolzahl RP ist, kann der Drehwinkel direkt nach dem Einschalten des Motors weder elektrisch bezüglich des Rotors noch mechanisch exakt angegeben werden, sondern es muss erst eine Initialisierung durchgeführt werden, um einen definierten Anfangszustand zu erreichen. Dies ist bei sicherheitsrelevanten Anwendungen oft nicht tolerierbar.

Mit dem elektrischen Winkel phi_el kann beispielsweise die Kommutierung des Motors 10 in dem Modul COMMUT 18 durchgeführt werden, oder der Winkel phi_el kann einem externen Steuergerät CTRL 48 zugeführt werden, das dann entsprechend reagiert.

Als Rotorstellungssensoren werden bevorzugt Hallsensoren oder magnetoresistive (MR-) Sensoren wie z.B. AMR- und GMR-Sensoren verwendet. Solche Sensoren können allgemein als magnetisch abtastende Sensoren bezeichnet werden.

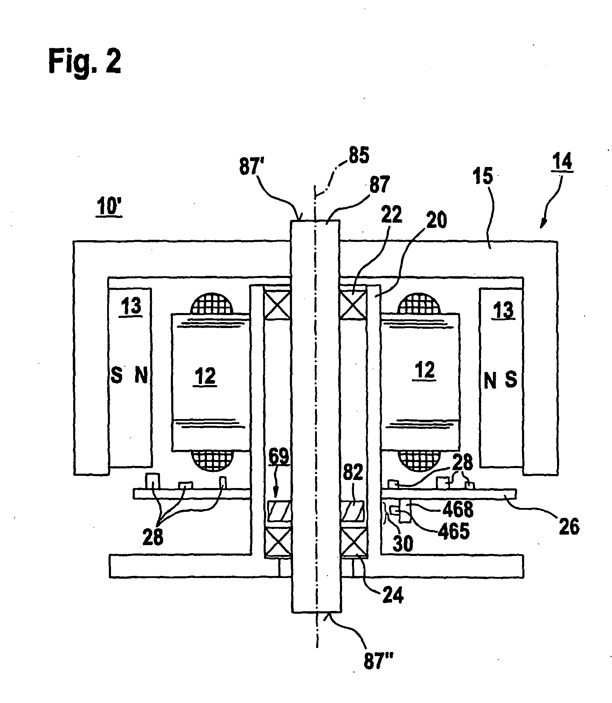

**Fig. 2** zeigt einen Schnitt durch die Wellenachse (Drehachse) 85 eines schematisch dargestellten Außenläufermotors 10'. Der Motor 10' weist ein Lagerrohr 20 auf, in dem die Welle 87' über zwei Lager 22 und 24 gelagert ist. Am Umfang des Lagerrohrs 20 ist der Stator 12 befestigt. An der Welle 87 ist ein Rotortopf 15 befestigt, und in dem Rotortopf 15 ist der permanent-magnetische Rotormagnet 13 befestigt, so dass er dem Stator 12 gegenüberliegt und mit diesem wechselwirken kann.

An dem Lagerrohr 20 ist weiterhin eine Leiterplatte 26 mit elektrischen und elektronischen Bauteilen 28 angeordnet. An der Leiterplatte 26 ist die Leiterplatte 468 aus Fig. 1 mit dem Rotorstellungssensor 465 und dem - nicht dargestellten - Rotorstellungssensor 460 angebracht, so dass sie parallel zu der Wellenachse 85 verläuft.

Der schematisch dargestellte Sensormagnetring 69 mit dem Sensormagneten 82 ist verdrehsicher auf der Welle 87 derart angeordnet, dass die Rotorstellungssensoren 460 und 465 im zylindrischen Umfangsbereich 30 des Sensormagneten 82 liegen. Da der Sensormagnetring 69 in diesem Ausführungsbeispiel innerhalb des Lagerrohrs 20 liegt, ist das zwischen dem Sensormagnetring 69 und den Rotorstellungssensoren 460, 465 liegende Lagerrohr 20 bevorzugt aus einem magnetisch nichtleitenden Material wie z.B. Aluminium oder Kunststoff gefertigt.

Die Welle 87 wird bevorzugt aus einem magnetisch leitenden Werkstoff, beispielsweise einem magnetisch leitenden Stahl gefertigt, damit diese als magnetischer Rückschluss für den Sensormagneten 82 wirken kann. Es ist jedoch auch eine Welle aus einem magnetisch nichtleitenden Material wie z.B. Kunststoff möglich.

Eine Besonderheit dieses initialisierungsfreien Absolutwertsystems ist, dass weder der Sensormagnet 82 noch die Rotorstellungssensoren 460, 465 zentral an einem Wellenende bzw. in der Verlängerung der Wellenenden 87' 87" angeordnet sind, sondern dass beide Wellenenden 87', 87" frei sind und genutzt werden können. Man kann von einem dezentralen Absolutwertsystem sprechen, und dieses ermöglicht neue Anwendungen. Insbesondere Anwendungen, bei denen beide Wellenenden 87', 87" des Elektromotors zum Antrieb benötigt werden, können mit einem erfindungsgemäße Winkelbestimmungssystem versehen werden.

Bei einem - nicht dargestellten - Innenläufermotor oder einem Lüfter kann der Sensormagnetring 69 in gleicher Weise auf der Welle angeordnet werden. Das Absolutwertsystem ist somit universell einsetzbar.

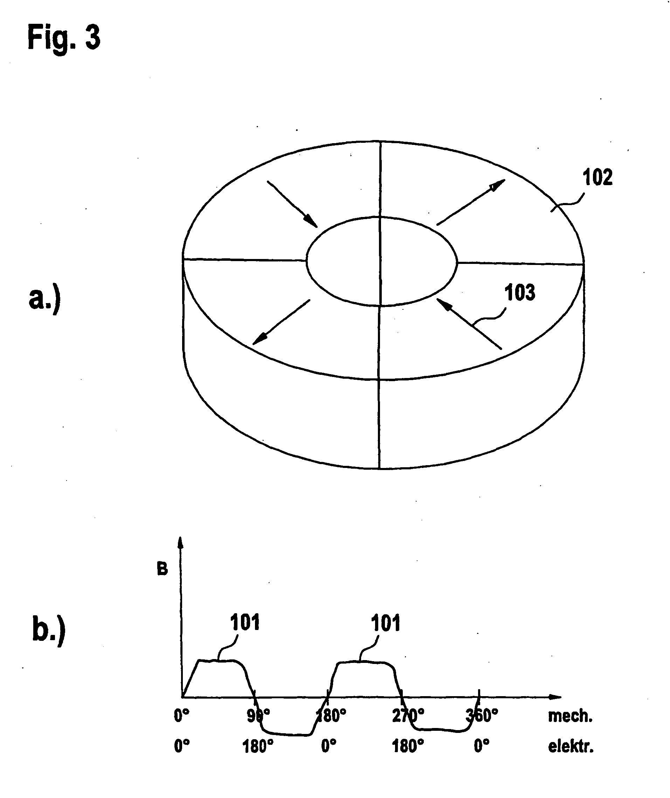

**Fig. 3** zeigt einen vierpoligen Sensormagneten 102, bei dem die einzelnen Pole homogen und in eine Richtung magnetisiert sind. Die Magnetisierung ist mit 103 bezeichnet. Die resultierende magnetische Flussdichte B am Umfang ist unten über den mechanischen und den elektrischen Drehwinkel aufgetragen, und es ergibt sich ein trapezförmiger Verlauf der magnetischen Flussdichte B. Durch die Plateaus 101 ist eine Auswertung in der Mitte der Pole schwierig.

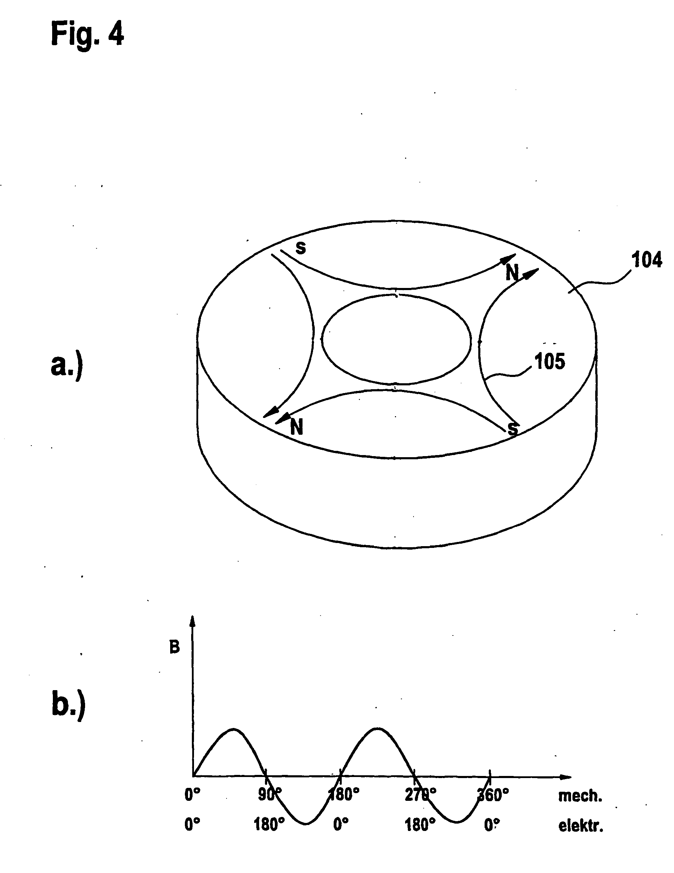

**Fig. 4** zeigt einen vierpoligen Sensormagneten 104 mit einer Magnetisierung, die als polorientiert und lateral (im Gegensatz zu einer ebenfalls möglichen axialen Magnetisierung) bezeichnet werden kann. Die Magnetisierung 105 verläuft bogenförmig durch den Magneten.

Die am Umfang gemessen magnetische Flussdichte ist analog zu Fig. 3 aufgetragen. Es ergibt sich eine im Wesentlichen sinusförmige magnetische Flussdichte, die besonders gut zur Auswertung geeignet ist.

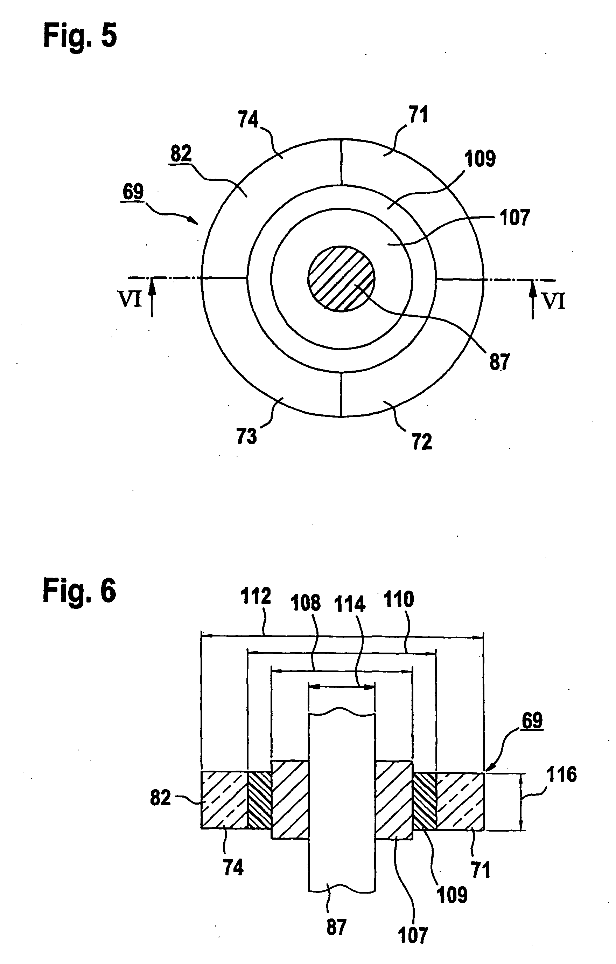

**Fig. 5** zeigt eine Draufsicht auf den Sensormagnetring 69 und Fig. 6 einen Schnitt durch den Sensormagnetring 69, wobei der Sensormagnetring 69 auf der Welle 87 angeordnet ist. Der Sensormagnetring 69 weist den Sensormagneten 82 mit den vier Sensorpolen 71, 72, 73 und 74, einen Metallring 107 und einen die Sensorpole 71 bis 74 mit dem Metallring 107 verbindenden Kunststoffring 109 auf.

Der Metallring 107 sitzt auf der Welle 87 und ist mit dieser drehfest verbunden. Bevorzugt wird für den Metallring 107 Messing verwendet. Der Kunststoff 109 wird beispielsweise über ein Spritzgussverfahren zwischen den Metallring 107 und den Sensormagneten 82 gebracht, um diese zu verbinden und gleichzeitig einen Ausgleich für durch thermische Ausdehnung entstehende Spannungen zu ermöglichen, die ansonsten zu einer Sprengung des Sensormagneten 82 führen könnten.

Der Außendurchmesser des Sensormagneten 82 ist mit 112 bezeichnet, und er beträgt beispielsweise 37 mm. Der Außendurchmesser liegt bevorzugt im Bereich 15 mm bis 50 mm, weiter bevorzugt im Bereich 20 bis 40 mm.

Der Innendurchmesser des Sensormagneten 82 bzw. der Außendurchmesser des Kunststoffrings 109 ist mit 110 bezeichnet. Die Länge 110 beträgt beispielsweise 27 mm.

Der Innendurchmesser des Kunststoffrings 109 bzw. der Außendurchmesser des Metallrings 107 ist mit 108 bezeichnet. Die Länge 108 beträgt beispielsweise 20 mm.

Der Durchmesser der Welle 87 ist mit 114 bezeichnet, und er beträgt beispielsweise 8 mm. Bevorzugte Werte für den Durchmesser 114 der Welle liegen im Bereich 5 mm bis 15 mm, es sind jedoch je nach Motorgröße größere und kleinere Durchmesser möglich.

Der Innendurchmesser des Metallrings 107 ist bevorzugt so gewählt, dass eine gute Verbindung mit der Welle 87 entsteht. Die Verwendung eines inneren Metallrings 107 ist vorteilhaft, da der Sensormagnet 82 in einer oder mehreren Standardgrößen gefertigt werden kann und die Anpassung des Sensormagnetrings 69 an die Welle 87 über eine in der Herstellung günstige Änderung des Innendurchmessers 114 des Metallrings 107 erfolgen kann.

Die Breite des Magnetmaterials 71 bis 74 ist mit 116 bezeichnet, und die Breite 116 für einen Sensormagneten beträgt beispielsweise 7 mm. Die Breite für einen reinen Sensormagneten, der also nicht gleichzeitig als Rotormagnet dient, liegt bevorzugt im Bereich 3 mm bis 20 mm, weiter bevorzugt im Bereich 5 mm bis 15 mm, und besonders bevorzugt im Bereich 6 mm bis 12 mm.

Die Sensorpolzahl SP beträgt bevorzugt SP = 2, 4, 6 oder 8 und besonders bevorzugt SP = 2 oder 4.

In Anwendungsfällen, in denen der Sensormagnetring 69 in einer korrosiven Umgebung angeordnet ist, kann der Sensormagnet 82 zusätzlich von einem - bevorzugt magnetisch nichtleitenden - korrosionsbeständigen Material umgeben werden. So ist es beispielsweise möglich, den Sensormagneten in magnetisch nichtleitendem Edelstahl einzuschweißen. Mit einem solchen Sensormagnetring 69 kann beispielsweise ein Nassläufer realisiert werden, bei dem die Welle von Kühlflüssigkeit umgeben ist.

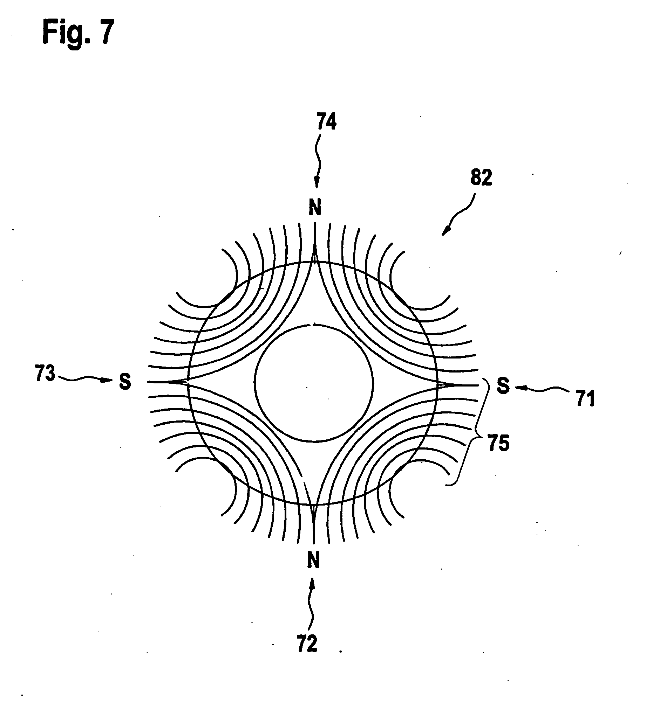

**Fig. 7** zeigt eine detaillierte Darstellung des Magnetfelds bzw. der magnetischen Flusslinien des ringförmigen Sensormagneten 82 aus Fig. 1.

Der Sensormagnet 82 ist vierpolig ausgeführt und weist die zwei Nordpole 72, 74 (N) und die zwei Südpole 71, 73 (S) auf. Der Sensormagnet 82 ist sinusförmig magnetisiert, sodass sich an dessen äußerem Umfang ein im Wesentlichen sinusförmiger magnetischer Flussverlauf ergibt. Der durch die Magnetisierung bestimmte magnetische Flussverlauf zwischen den einzelnen Magnetpolen 71, 72, 73, 74 ist durch entsprechende magnetische Feldlinien 75 angedeutet.

Der Sensormagnet 82 hat bevorzugt eine im Wesentlichen zylindrische Form. Als Magnetwerkstoff ist beispielsweise ein Hartferrid-Compound 13/22p nach DIN 17 410 geeignet.

Sensorik

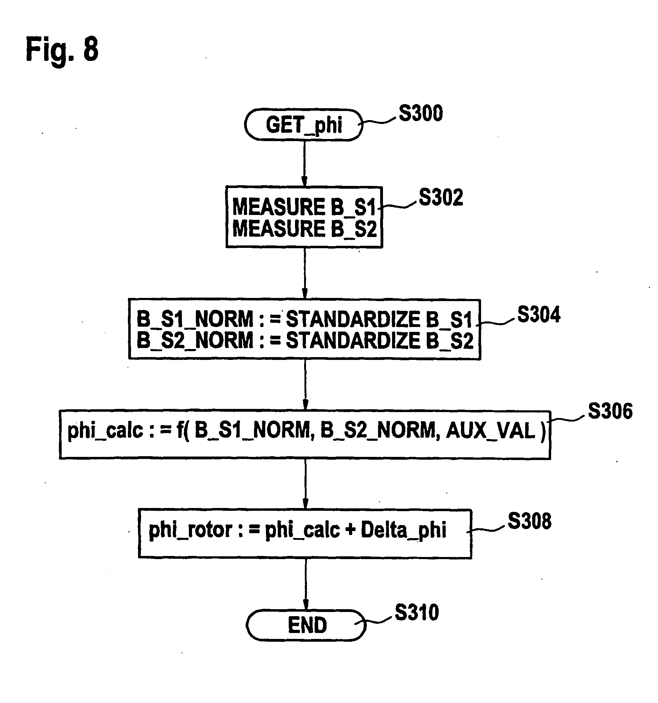

**Fig. 8** zeigt ein Flussdiagramm einer Routine GET_phi S300 zur Bestimmung des Drehwinkels $\varphi$ des Sensormagneten.

Im Schritt S302 werden die Werte B_S1 (SIG1) des ersten analogen Rotorstellungssensors 84' und B_S2 (SIG2) des zweiten analogen Rotorstellungssensors 84" erfasst, vgl. Fig. 7.

Im Schritt S304 wird eine Normierung der Werte B_S1 und B_S2 durchgeführt, und die normierten Werte werden den Variablen B_S1_NORM und B_S2_NORM zugewiesen. Bei der Normierung wird bspw. ein ggf. vorhandener Offset eliminiert, und der Wert wird auf den gewünschten Wertebereich abgebildet, bspw. auf die Wertebereiche [0.. 255] oder [-1.0..1.0]. Die Normierung kann sowohl analog (z. B. im Rotorstellungssensor) also auch digital (z. B. im Mikroprozessor) erfolgen. Durch die Normierung werden verschiedene Einflüsse auf die Messwerte B_S1 und B_S2 beseitigt bzw. vermindert. So entstehen bspw. Abweichungen durch mechanische Exzentritäten und Fertigungstoleranzen, durch Überlagerung anderer Magnetfelder, durch eine durch Wärme hervorgerufene Schwächung des Sensormagnetfelds und mechanische Ausdehnung des Rotors sowie durch bei hohen Drehzahlen entstehende Signalverminderungen durch frequenzabhängige Begrenzungen der Sensoreigenschaften.

Anschließend wird im Schritt S306 der Drehwinkel φ bzw. phi_calc als Funktion der Werte B_S1_NORM und B_S2_NORM und ggf. zusätzlicher Hilfswerte AUX_VAL ermittelt. Der Drehwinkel φ wird dabei entweder als Absolutwert phi_el bezüglich einer elektrischen Umdrehung (360° el.), also der Drehung um den Winkel eines Nord- und eines Südpols des Sensormagneten und/oder des Rotormagneten, oder aber bezüglich einer mechanischen Umdrehung (360° mech.) des Rotors (360° mech.) ermittelt. Jeder Rotorlage innerhalb einer elektrischen bzw. mechanischen Umdrehung ist somit ein eindeutiger Wert des Drehwinkels zugeordnet.

Insbesondere bei Rotoren mit einem Rotormagneten und einem zusätzlichen Sensormagneten kann es erwünscht sein, dass z.B. ein Polübergang des Rotormagneten als 0° definiert wird. Daher kann der ermittelte Wert phi_calc nochmals um einen Korrekturwert Delta_phi verschoben werden, so dass die resultierende Variable phi_rotor an der Stelle des Polübergangs den Wert 0° aufweist. In dieser Anmeldung wird für Winkel üblicherweise der Wertebereich [0°..360°] verwendet. Es könne natürlich auch andere Wertebereiche wie [0..2π] verwendet werden, wie es dem Fachmann vertraut ist.

Im Schritt S308 wird die Routine GET_phi verlassen.

Anordnung der Rotorstellungssensoren auf einer Kreisbahn

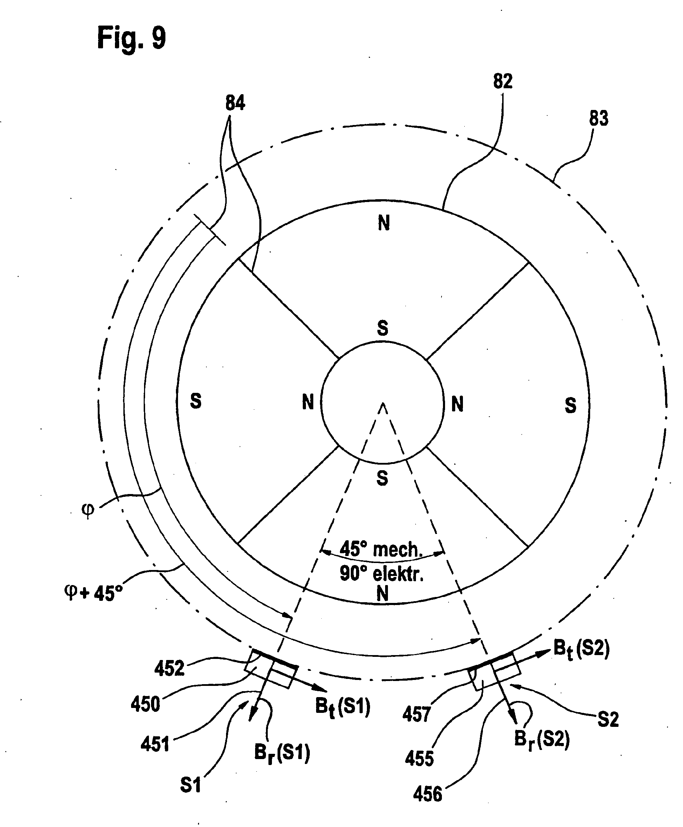

**Fig. 9** zeigt einen vierpoligen Sensormagneten 82 und zwei Rotorstellungssensoren 450, 455, die tangential auf einer konzentrischen Kreisbahn 83 um den Sensormagneten 82 im Winkelabstand von 90 °el. bzw. 45 °mech. angeordnet sind.

Die bei dieser Anordnung gezeigten grundsätzlichen Berechnungen sind auch für die weiteren Ausführungsbeispiele relevant und werden hier exemplarisch dargestellt.

Die sensitiven Flächen 452, 457 der Rotorstellungssensoren messen nur den Anteil der vektoriellen magnetischen Flussdichte B, der jeweils senkrecht zu der sensitiven Fläche 452, 457 und damit parallel zur Normalen 451 bzw. 456 der sensitiven Fläche 452, 457 ist.

Die vektorielle magnetische Flussdichte B setzt sich zusammen aus einer radialen Komponente B_r und einer tangentialen Komponente B_t. Bei einer sinusförmigen Verteilung der magnetischen Flussdichte B ergibt sich

$$B\_r = B\_r0 * \sin(2 * \phi) \qquad\qquad (1')$$

$$B\_t = - B\_t0 * \cos(2 * \phi) \qquad\qquad (2')$$

bzw. allgemeiner

$$B\_r = B\_r0 * \sin(\omega * \phi) \qquad\qquad (1)$$

$$B\_t = - B\_t0 * \cos(\omega * \phi) \qquad\qquad (2)$$

mit

φ:      Drehwinkel des Sensormagneten bezüglich der Stelle (S1 oder S2) des Rotorstellungssensors
ω:      Polpaarzahl, hier also ω = 2,
B_r0:   Amplitude der radialen Komponente der magnetischen Flussdichte
B_t0:   Amplitude der tangentialen Komponente der magnetischen Flussdichte

Da die Rotorstellungssensoren 450, 455 auf der Kreisbahn 83 angeordnet sind, wird nur der radiale Anteil B_r der magnetischen Flussdichte B gemessen, da dieser von der Richtung her mit den Normalen 451, 456 übereinstimmt. Der tangentiale Anteil B_t steht dagegen senkrecht zu den Normalen 451, 456 und wird daher im Idealfall nicht gemessen. Der mechanische Drehwinkel $\varphi$ kann z.B. als Winkel zwischen einem Polwechsel 84 des Sensormagneten 82 und dem Rotorstellungssensor 450 definiert werden. Für den Drehwinkel $\phi$ am Sensor S1 450 gilt dann $\phi = \varphi$, und für den Drehwinkel $\phi$ am Sensor S2 455, der einen Winkelabstand von 90 °el. bzw. 45 °mech. hat, gilt $\phi = \varphi + 45°$ mech. Somit gilt zusammen mit Gleichung (1)

$$B\_S1 = B\_r(S1) = B\_r0 * \sin(2 * \varphi) \tag{3}$$

$$B\_S2 = B\_r(S2) = B\_r0 * \sin(2 * (\varphi + 45°)) = B\_r0 * \cos(2 * \varphi) \tag{4}$$

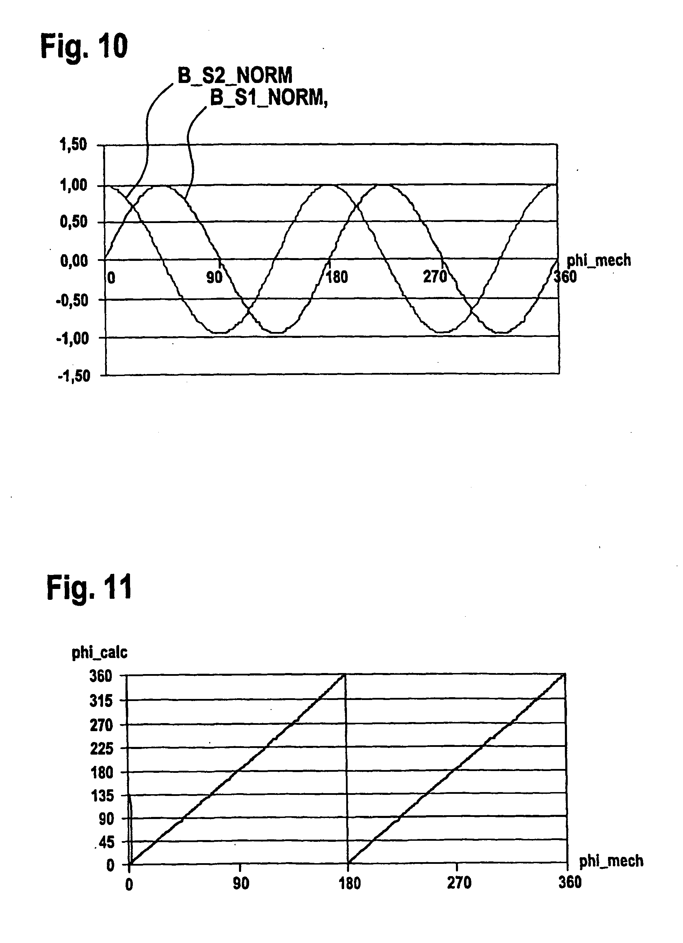

**Fig. 10** zeigt die beiden Signale B_S1_NORM und B_S2_NORM, die durch die Normierung der Signale B_S1 und B_S2 entstehen. Da der Sensormagnet vierpolig ist, weisen die Signale B_S1_NORM und B_S2_NORM bei einer Umdrehung des Rotors (360° mech.) jeweils zwei volle Perioden (720° el.) auf.

In diesem einfachen Fall lässt sich der Drehwinkel $\phi$ wie folgt berechnen. Es gilt:

$$phi\_calc' := \arctan(B\_S1 / B\_S2) \tag{5}$$

Die arctan-Funktion liefert Werte im Bereich [-90°..90°], so dass keine eindeutige Zuordnung zum Wertebereich [0°..360°] möglich ist. Daher muss eine so genannte Quadrantenunterscheidung mit den ursprünglichen Signalen B_S1_NORM und B_S2_NORM durchgeführt werden, um den Absolutwert phi_calc zu erhalten.

  a) Bei B_S1_NORM $\geq$ 0 und B_S2_NORM $\geq$ 0 gilt phi_calc = phi_calc'
  b) Bei B_S1_NORM $\geq$ 0 und B_S2_NORM < 0 gilt phi_calc = 180° + phi_calc'

  a) Bei B_S1_NORM < 0 und B_S2_NORM < 0 gilt phi_calc = 180° + phi_calc'

  a) Bei B_S1_NORM < 0 und B_S2_NORM $\geq$ 0 gilt phi_calc = 360° - phi_calc'

**Fig. 11** zeigt den resultierenden Wert phi_calc über eine ganze Umdrehung des Rotors (360° mech.). Der Winkel phi_calc durchläuft dabei bei jeder mechanischen Umdrehung (360° mech.) zweimal den Wertebereich [0°.. 360°]. Um einen Absolutwert im Bereich [0°..360°] zu erhalten, der für eine volle Umdrehung des Rotors eindeutig ist, kann der Winkel phi_calc beispielsweise halbiert werden, und bei jeder zweiten Hälfte der Umdrehung wird der Wert 180° addiert.

Anordnung der Rotorstellungssensoren in einer Ebene

**Fig. 12** zeigt einen vierpoligen Sensormagneten 82 und zwei Rotorstellungssensoren 460, 465, die hier in einer Ebene 469 angeordnet sind, welche parallel zu der Drehachse 85 des Sensormagneten 82 verläuft.

Die Rotorstellungssensoren 460, 465 weisen jeweils eine sensitive Fläche 462, 467 auf, welche den Anteil der magnetischen Flussdichte B in Richtung der Normalen 461, 466 misst. Die magnetische Flussdichte B($\phi$) weist an der Stelle $\phi$ = S1 des Sensors S1 460 den Radialanteil B_r(S1) und den Tangentialanteil B_t(S1) auf, und die magnetische Flussdichte B($\phi$) weist an der Stelle $\phi$ = S2 des Sensors S2 465 den Radialanteil B_r(S2) und den Tangentialanteil B_t(S2) auf. Auf Grund der Anordnung in einer Ebene, z.B. auf der Leiterplatte 468, befinden sich die sensitiven Flächen der Rotorstellungssensoren 460, 465 in der Ebene 469.

Die Anordnung der Rotorstellungssensoren kann mit den bei der Herstellung auftretenden Toleranzen folgendermaßen angegeben werden:

- Tangentialrichtung A_S $\pm$ $\Delta$t
- Radialrichtung r_S $\pm$ $\Delta$r, also der Abstand der Sensormagnetenachse 85 zu der Ebene 469
- Axialrichtung z $\pm$ $\Delta$z

Die Anordnung der Rotorstellungssensoren 460, 465 auf der Leiterplatte 469 ermöglicht eine einfache und günstige Montage. Dabei wird die Leiterplatte 469 bevorzugt auf der Seite der Rotorstellungssensoren 460, 465 angeordnet, die dem Sensormagneten 82 gegenüberliegt, um eine Beeinflussung des magnetischen Flusses B durch die Leiterplatte zu verringern.

Die Montage der Rotorstellungssensoren 450 und 455 auf einer Kreisbahn 83 gemäß Fig. 9 ist dem gegenüber komplizierter, und sie erfordert bspw. eine Anbringung der Rotorstellungssensoren 450, 455 auf geneigten Rampen, welche auf einer Leiterplatte befestigt sind, auf einer gebogenen Form oder auf zwei Sockeln, wobei hier jedoch eine Verdrahtung erforderlich ist.

Versuche haben ergeben, dass bei einer Anordnung der Rotorstellungssensoren 460, 465 gemäß Fig. 12 in einer Ebene und mit einem Winkel von $\Delta = \alpha + \beta = 45°$ mech. (90° el.) zueinander die Rotorstellungssignale B_S1 und B_S2 nicht mehr eine Phasenverschiebung von 90° aufweisen, sondern bspw. 100°. Diese Abweichung kommt daher, dass die Rotorstellungssensoren 460, 465 nicht mehr tangential auf einer Kreisbahn liegen, sondern gegenüber dieser gekippt sind. Hierdurch messen die Rotorstellungssensoren 460, 465 sowohl einen Anteil des radialen Anteils B_r der magnetischen Flussdichte B als auch einen Anteil des tangentialen Anteils B_t der magnetischen Flussdichte B.

Weitere Versuche haben ergeben, dass bei einem Winkel $\Delta = \alpha + \beta \approx 30°$ mech. zwischen den Rotorstellungssensoren 460 und 465 und einem vierpoligen Sensormagneten 82 überraschend wieder eine Phasendifferenz der resultierenden Signale von etwa 90° auftritt. Durch eine geeignete Wahl des Winkels $\Delta \neq 90°$ el. zwischen den Rotorstellungssensoren 460, 465 ist es also möglich, auch bei zwei in derselben Ebene 469 angeordneten Rotorstellungssensoren 460, 465 zwei um ungefähr 90° Phasendifferenz verschobene Rotorstellungssignale B_S1 und B_S2 zu erhalten. Dies ermöglicht eine einfache Ermittlung des Absolutwerts φ für den Drehwinkel.

Mathematische Berechnung für den Fall $\beta = \alpha$

Die Signale B_S1 und B_S2 der Rotorstellungssensoren 460, 465 sollen nun rechnerisch ermittelt werden. Der Drehwinkel φ wird als Winkel zwischen dem Polübergang 84 und der sich durch die Achse 85 des Sensormagneten 82 erstreckenden Mittelsenkrechten 470 definiert. Der Winkel α bezeichnet den Winkel zwischen der Mittelsenkrechten 470 und dem Rotorstellungssensor 465, und der Winkel β den Winkel zwischen der Mittelsenkrechten 470 und dem Rotorstellungssensor 460. Mit dem Ansatz $\phi = \varphi + \alpha$ für den Rotorstellungssensor 465 ergibt sich aus den Gleichungen (1) und (2) für die radiale Komponente B_r und die tangentiale Komponente B_t der magnetischen Flussdichte

$$B\_r = B\_r0 * \sin(\omega (\varphi + \alpha)) \qquad\qquad (1'')$$

$$B\_t = -B\_t0 * \cos(\omega (\varphi + \alpha)) \qquad\qquad (2'')$$

Für die vom Sensor 460 gemessene magnetische Flussdichte folgt bei diesem Ansatz

$$
\begin{aligned}
B\_S1 \quad &= B\_r * \cos(\alpha) - B\_t * \sin(\alpha) \\
&= B\_r0 * \sin(\omega (\varphi + \alpha)) * \cos(\alpha) + B\_t0 * \cos(\omega (\varphi + \alpha)) * \sin(\alpha) \qquad (6)
\end{aligned}
$$

Das Signal B_S1 ist somit eine Überlagerung (Superposition) zweier harmonischer Schwingungen mit gleicher Kreisfrequenz, und es gilt

$$B\_S1 = A * \sin(\omega * \varphi + \gamma) \qquad\qquad (7)$$

mit

$$A = ((B\_r0 * \cos(\alpha))^2 + (B\_t0 * \sin(\alpha))^2) \qquad\qquad (8)$$

und

$$\gamma = \arctan( \; (B\_r0 * \sin(\omega \; \alpha) * \cos(\alpha) + B\_t0 * \cos(\omega \; \alpha) * \sin(\alpha)) \; /$$
$$(B\_r0 * \cos(\omega \; \alpha) * \cos(\alpha) - B\_t0 * \sin(\omega \; \alpha) * \sin(\alpha)) \; ) \qquad (9)$$

Bei einer symmetrischen Anordnung der beiden Rotorstellungssensoren 460, 465 gilt β = α, und für das Signal B_S2 folgt das Ergebnis durch Ersetzen von α durch -α. Es gilt

$$B\_S2 = A * \sin(\omega * \varphi - \gamma) \qquad (10)$$

Aus den Gleichungen (9) und (10) ergibt sich für den Winkel φ bei symmetrisch angeordneten Rotorstellungssensoren 460, 465

$$\varphi = 1/\omega * \arctan((B\_S1 + B\_S2)/(B\_S1 - B\_S2) * \tan(\gamma)) \qquad (11)$$

Hierbei sind
ω = Polpaarzahl des Sensormagneten
γ = Korrekturwinkel gemäß Gleichung (9).

Mit der Gleichung (11) lässt sich der Winkel φ bei einer symmetrischen Anordnung der Rotorstellungssensoren 460, 465 und damit β = α für einen beliebigen Abstand bzw. Winkel der Rotorstellungssensoren 460, 465 zueinander ausrechnen. Dies ermöglicht also auch eine Auswertung der Rotorstellungssignale B_S1 und B_S2 für Fälle, bei denen keine Phasendifferenz von 90° zwischen den Signalen besteht.

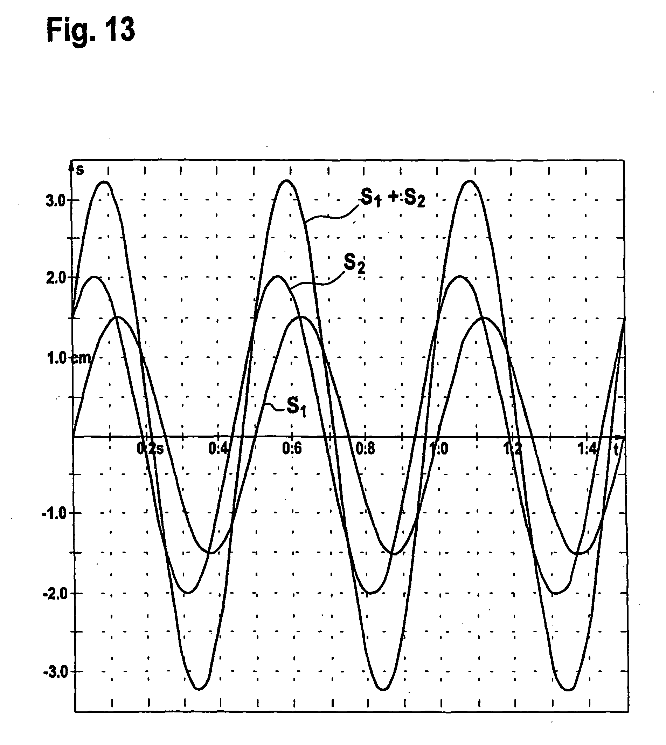

Mathematisch handelt es sich um eine Superposition zweier im Wesentlichen sinusförmiger Signale B_S1 und B_S2 mit gleichem Vorfaktor (Kreisfrequenz) ω, jedoch im allgemeinen Fall mit unterschiedlichen Amplituden und unterschiedlichen Phasen. Fig. 13 zeigt zur Veranschaulichung zwei sinusförmige Signale S1 und S2, aufgetragen über die Zeit t. Die Superposition ergibt wieder ein sinusförmiges Signal S1+S2, aus dem innerhalb einer Periode die Zeit t bzw. der Drehwinkel φ eindeutig ermittelbar ist. Die Ausführungsbeispiele zeigen jeweils die Ermittlung von φ für eine bestimmte Anordnung der Rotorstellungssensoren.

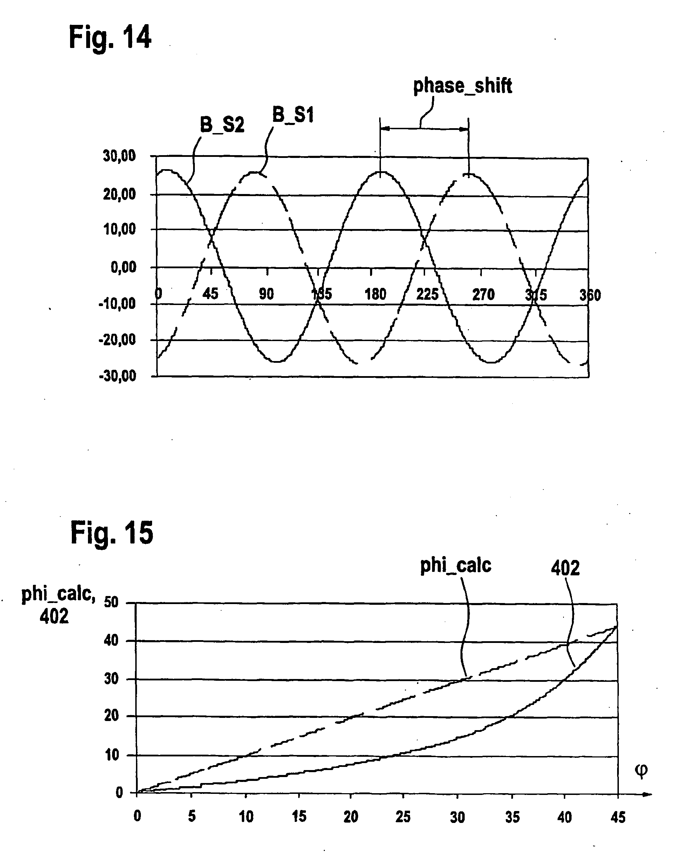

**Fig. 14** zeigt die Signale B_S1 und B_S2, aufgetragen über eine ganze Umdrehung des Rotors. Die Rotorstellungssensoren waren dabei wie folgt angeordnet:
r_S = 22 mm
A_S = 24 mm
α = β

Die Amplituden für die magnetische Flussdichte an den Stellen der Rotorstellungssensoren 460 und 465 sind
B_r0 = 29,4 mT
B_t0 = 14,2 mT

Die resultierende Phasendifferenz zwischen den Signalen B_S1 und B_S2 beträgt in diesem Fall 143,96°. Die Phasendifferenz phase_shift lässt sich bspw. ermitteln, indem der minimale Winkelabstand phase_shift zwischen zwei Maxima der beiden Signale B_S1 und B_S2 bestimmt wird, wobei 360° einer Periode der Signale entspricht. Die Phasendifferenz liegt somit im Bereich [0°..180°].

**Fig. 15** zeigt die aus den Signalen B_S1 und B_S2 errechneten Winkel im Bereich [0°.. 45°]. Die gestrichelt dargestellte Kurve phi_calc wurde mit der Gleichung (11) berechnet, und sie stimmt ziemlich genau mit dem Drehwinkel φ überein. Die Kurve 402 wurde dagegen ohne die Korrektur gemäß Gleichung (11) berechnet, und es ist ein deutlicher Fehler von bis zu 15,3° ersichtlich. Es zeigt sich also, dass trotz einer Phasendifferenz ungleich 90° zwischen den Signalen B_S1 und B_S2 eine Berechnung des Drehwinkels phi_calc möglich ist.

Mathematische Berechnung für den Fall einer Verschiebung bzgl. der Mittelsenkrechten

Bei der Anordnung der Rotorstellungssensoren gem. Fig. 12 kann es durch Fertigungstoleranzen vorkommen, dass die Winkel α und β nicht gleich sind. Dies hat eine tangentiale Verschiebung Δt gegenüber einer symmetrischen Anordnung bezüglich der Mittelsenkrechten 470 zur Folge, die bei dieser Anordnung kritisch ist, da sich die Abstände der Rotorstellungssensoren und deren Winkel zum Sensormagneten unterschiedlich ändern. Die beiden anderen Toleranzrichtungen $\Delta r$ für den Abstand r_S der Ebene von der Mitte des Sensormagneten und $\Delta z$ für die axiale Abweichung sind weniger kritisch, solange sich die Rotorstellungssensoren im Bezug auf die axiale Abweichung noch im Umfangsbereich des Sensormagneten befinden. Daher wird im Folgenden nur eine Abweichung um $\Delta t$ betrachtet.

Mit dem mathematischen Ansatz

$$\alpha = \arctan((A\_S/2 + \Delta t)/r\_S) \tag{12}$$

$$\beta = \arctan((A\_S/2 - \Delta t)/r\_S) \tag{13}$$

ergibt sich für den Winkel $\varphi$

$$\varphi = 1/\omega * \arctan((B\_S2 * F1 - B\_S1 * F2) / (B\_S1 * F3 - B\_S2 * F4)) \tag{14}$$

mit den Korrekturfaktoren

$$F1 = A1 * \sin(\gamma) \tag{15}$$

$$F2 = A2 * \sin(\xi) \tag{16}$$

$$F3 = A2 * \cos(\xi) \tag{17}$$

$$F4 = A1 * \cos(\gamma) \tag{18}$$

und den aus der Superpositionsberechnung resultierenden Sensorsignalamplituden

$$A1 = ((B\_r01 * \cos(\alpha))^2 + (B\_t01 \sin(\alpha))^2)^{1/2} \tag{19}$$

$$A2 = ((B\_r02 * \cos(\beta))^2 + (B\_t02 \sin(\beta))^2)^{1/2} \tag{20}$$

und den Phasenverschiebungskorrekturfaktoren

$$\gamma = \arctan( \ (B\_r01 * \sin(\omega\,\alpha) * \cos(\alpha) + B\_t01 * \cos(\omega\,\alpha) * \sin(\alpha)) \ /$$
$$(B\_r01 * \cos(\omega\,\alpha) * \cos(\alpha) - B\_t01 * \sin(\omega\,\alpha) * \sin(\alpha)) \ ) \tag{21}$$

$$\xi = \arctan( \ (B\_r02 * \sin(\omega\,\beta) * \cos(\beta) + B\_t02 * \cos(\omega\,\beta) * \sin(\beta)) \ /$$
$$(B\_r02 * \cos(\omega\,\beta) * \cos(\beta) - B\_t02 * \sin(\omega\,\beta) * \sin(\beta)) \ ) \tag{22}$$

mit

B_r01: Amplitude der radialen Komponente der magnetischen Flussdichte am Sensor S1
B_t01: Amplitude der tangentialen Komponente der magnetischen Flussdichte am Sensor S1
B_r02: Amplitude der radialen Komponente der magnetischen Flussdichte am Sensor S2
B_t01: Amplitude der tangentialen Komponente der magnetischen Flussdichte am Sensor S2

Die Berechnung zeigt, dass sich auch bei komplizierten Anordnungen der Sensormagneten der Drehwinkel φ aus den Sensorsignalen ermitteln lässt.

Die notwendigen Korrekturfaktoren lassen sich beispielsweise ermitteln, indem die Anordnung der Rotorstellungssensoren bestimmt wird und die resultierenden magnetischen Flussdichten an den Orten der Rotorstellungssensoren ermittelt werden. Hierfür bieten einige Hersteller von Magneten Computersoftware an, die für den jeweiligen Magnettyp die magnetische Flussdichte an vorgegebenen oder frei wählbaren Stellen angeben. Diese Angabe geschieht bevorzugt bereits aufgeteilt in den Radialanteil B_r und den Tangentialanteil B_t.

Alternativ kann der Rotor - bevorzugt direkt beim Hersteller - in Bewegung gesetzt werden, und die Hilfswerte, insbesondere die Phasendifferenz der Rotorstellungssignale, werden durch Analyse der gemessenen Signale berechnet. Aus dem Ergebnis können die Hilfswerte für die Berechnung des Drehwinkels φ, also in dem vorhergehenden Ausführungsbeispiel insbesondere die Korrekturfaktoren F1 bis F4, die Phasenverschiebungskorrekturfaktoren γ und ξ und die Amplitudenkorrekturfaktoren A1 und A2 ermittelt werden. Sofern eine solche Ermittlung über eine Erstmessung der Signale direkt in dem Mikroprozessor des Elektromotors durchgeführt wird, erfordert dies einen Mikroprozessor mit mehr Leistung, als sie allein für die Berechnung des Drehwinkels φ notwendig ist. Die Analyse der Erstmessung kann auch extern in einer speziellen Analysevorrichtung erfolgen.

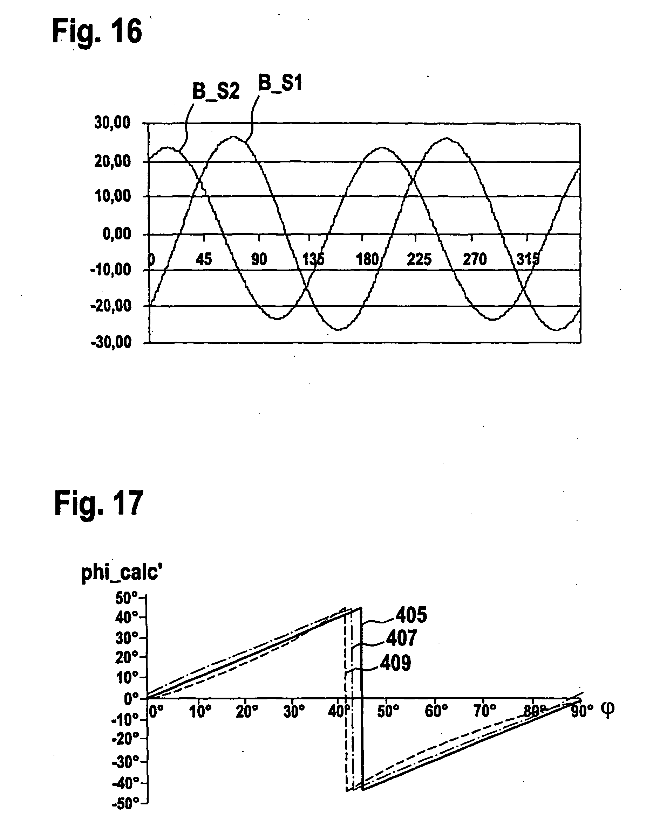

**Fig. 16** zeigt die Signale B_S1 und B_S2, aufgetragen über eine ganze Umdrehung des Rotors. Die Rotorstellungssensoren waren dabei wie folgt angeordnet:

$r\_S = 17$ mm

$$A\_S \pm \Delta t = 17 \text{ mm} + 0,7 \text{ mm}$$

$\alpha \neq \beta$

Die Amplituden für die magnetische Flussdichte an den Stellen der Rotorstellungssensoren 460 und 465 sind
$B\_r01 = 25,25$ mT
$B\_t01 = 12,4$ mT
$B\_r02 = 28,5$ mT
$B\_t02 = 13,8$ mT

Die resultierende Phasendifferenz zwischen den Signalen B_S1 und B_S2 beträgt in diesem Fall 105,77°.

**Fig. 17** zeigt die aus den Signalen B_S1 und B_S2 aus Fig. 16 errechneten Winkel phi_calc' im Bereich [0°.. 90°], also das Ergebnis vor der Quadrantenberechnung, vgl. Beschreibung zu Gleichung (5).

Die Linie 405 zeigt das Ergebnis der Berechnung gemäß der Gleichung (14) mit den Hilfswerten bzw. Faktoren F1 bis F4. Bei dieser Art der Berechnung findet üblicherweise zuvor keine Signalnormierung statt. Das Ergebnis stimmt ziemlich genau mit dem Drehwinkel φ überein, es gibt also weder eine Phasenverschiebung noch eine Abweichung in bestimmten Winkelbereichen.

Die Linie 407 zeigt das Ergebnis einer Berechnung gemäß Gleichung (11) mit einem Hilfswert bzw. Korrekturfaktor γ und einer vorhergehenden Normierung der Signale B_S1 und B_S2. Durch die Normierung erhält man ebenfalls einen Drehwinkelwert ohne Abweichung in bestimmten Winkelbereichen, was sich an den geraden Linien zeigt. Gleichzeitig ist jedoch durch die Art der Berechnung eine Phasenverschiebung von ca. 2° entstanden, was an dem Wechsel des Signals 407 im Bereich von 43° anstelle von 45° zu sehen ist. Eine solche Phasenverschiebung ist jedoch durch Addition eines Korrekturfaktors korrigierbar, wobei dieser hier den Wert 2° hat.

Die Linie 409 schließlich zeigt eine Berechnung ohne Normierung und ohne eine weitere Korrektur. Bei dieser Art der Berechnung ergibt sich sowohl die größte Phasenverschiebung als auch die größte Abweichung von der idealen Geraden, was an der Krümmung des Signals 409 zu sehen ist.

Bei einer größeren Phasendifferenz zwischen den Signalen B_S1 und B_S2 in Fig. 16 wäre der Unterschied zwischen den Linien 405, 407 und 409 größer.

Die Ausführungsbeispiele haben gezeigt, dass es möglich ist, ein Absolutwertsystem mit zwei im Wesentlichen sinusförmigen Sensorsignalen zu erzeugen, deren Phasenlage zueinander beliebig vorgegeben ist. Insbesondere vorteilhaft ist die hierdurch gegebene Freiheit der Platzierung des oder der Rotorstellungssensoren. Die beschriebene Absolutwertsensorik ist bei allen Arten von Motoren einsetzbar.

Ein Sensormagnet, bei dem der sinusförmige Verlauf der magnetischen Flussdichte perfekt der Sinus-Funktion entspricht, ist in der Produktion kaum realisierbar. Die notwendige Genauigkeit der Sensorik ist abhängig vom Anwendungsfall und wird vom Kunden vorgegeben. Die Genauigkeit ist dabei u.a. von der Polzahl und der Genauigkeit des durch den Sensormagneten 82 erzeugten magnetischen Flusses abhängig. Bei ganz einfachen Anwendungen werden üblicherweise Genauigkeiten von +/- 5° mech. gefordert, so dass bei einem vierpoligen Sensormagneten 82 der magnetische Fluss um maximal +/- 10° el. abweichen darf. Die Magnethersteller können aber auch vierpolige Sensormagneten mit einer sinusförmigen magnetischen Flussdichte liefern, die eine garantierte maximale Abweichung von +/- 2° el. haben. Damit ist der Drehwinkel mit einer Genauigkeit von +/- 1 ° mech. bestimmbar. Sofern die durch den Sensormagneten 82 erzeugte magnetische Flussdichte eine grundsätzliche Abweichung von der Sinusform hat, kann dies im $\mu$C 32 korrigiert werden.

Naturgemäß sind bei der vorliegenden Erfindung viele Abwandlungen denkbar. So kann anstelle des $\mu$C 32 oder zusätzlich zu diesem ein digitaler Signalprozessor (DSP) für die Verarbeitung der Rotorstellungssignale B_S1 und B_S2 gewählt werden, um größere und schnellere Berechnungen zu ermöglichen.

**Patentansprüche**

1. Elektromotor (10) mit einem Rotor (13), der auf einer um eine Drehachse (85) drehbaren Welle (87) angeordnet ist, und mit einem diesem Rotor (14) zugeordneten Stator (12) mit einer dreiphasigen Antriebswicklung,

   ferner mit einem Absolutwert-Drehwinkelsensor (46) zur drehwinkelabhängigen Steuerung der Ströme in der dreiphasigen Antriebswicklung, welcher Drehwinkelsensor (46) aufweist:

   Einen auf der drehbaren Welle (87) angeordneten und zusammen mit dieser um deren Drehachse (85) drehbaren Sensormagneten (82), welcher eine geradzahlige Zahl von mindestens zwei Sensor-Magnetpolen (71, 72, 73, 74) aufweist, die zur Erzeugung eines drehwinkelabhängigen Magnetflusses (88) mit etwa sinusförmigem Verlauf ausgebildet sind;

   und eine Auswertevorrichtung (32) zur Erzeugung eines Absolutwerts (phi_el, phi_mech) für den jeweiligen Drehwinkel (phi) des Rotors (14) aus den Ausgangssignalen (B_S1, B_S2) von zwei analogen Magnetfeldsensoren (460, 465), von denen jeder eine für den Magnetfluss sensitive fläche (462, 467) aufweist und welche in einem vorgegebenen Abstand ($A_S$) voneinander im Bereich dieses drehwinkelabhängigen Magnetflusses (88) und so angeordnet sind, dass die Normale (461, 466) auf der sensitiven Fläche (462, 467) eines Magnetfeldsensors die Drehachse (85) des Sensormagneten (82) nicht schneidet;

   so dass in der sensitiven Fläche (462, 467) des betreffenden Magnetfeldsensors (460, 465) eine vektorielle Komponente des dort wirksamen Magnetflusses (B) erfasst wird, welche vektorielle Komponente in Richtung der bei diesem Magnetfeldsensor (460, 465) vorhandenen Normalen (461) verläuft, um an dem betreffenden Magnetfeldsensor ein Rotorstellungssignal (B_S1, B_S2) zu erzeugen, welches Betrag und Vorzeichen der erfassten vektoriellen Komponente charakterisiert.

2. Elektromotor nach Anspruch 1, bei welchem die für den Magnetfluss sensitiven Flächen (462, 467) der beiden Magnetfeldsensoren (460, 465) etwa in derselben Ebene (469) angeordnet sind.

3. Elektromotor nach Anspruch 1 oder 2, bei welchem die beiden Magnetfeldsensoren (460, 465) in dem vorgegebenen Abstand ($A_S$) voneinander auf einer Leiterplatte (468) angeordnet sind.

4. Elektromotor nach einem der vorhergehenden Ansprüche, bei welchem der Sensormagnet (82) polorientiert magnetisiert ist.

5. Elektromotor nach einem der vorhergehenden Ansprüche, bei welchem der Sensormagnet (82) lateral magnetisiert ist.

6. Elektromotor nach einem der vorhergehenden Ansprüche, bei welchem der Sensormagnet (82) als Teil eines Sensormagnetrings (69) ausgebildet ist, welcher Sensormagnetring (69) auf der Welle (87) des Rotors (14) angeordnet ist.

7. Elektromotor nach Anspruch 6, bei welchem der Sensormagnetring (69) einen zwischen der Welle (87) und dem Sensormagneten (72) angeordneten elastischen Bereich (109) aufweist.

8. Elektromotor nach Anspruch 7, bei welchem der elastische Bereich (109) einen Kunststoff aufweist.

9. Elektromotor nach Anspruch 7 oder 8, bei welchem zwischen dem elastischen Bereich (10) und der Welle (87) ein Metallring (87) angeordnet ist.

10. Elektromotor nach einem der vorhergehenden Ansprüche, bei welchem die beiden analogen Magnetfeldsensoren (460, 465) in einer Sensorebene (469) angeordnet sind, welche nicht senkrecht zur Drehachse (85) des Sensormagneten (82) verläuft.

11. Elektromotor nach einem der vorhergehenden Ansprüche, bei welchem die beiden analogen Magnetfeldsensoren (460, 465) in einer Sensorebene (469) angeordnet sind, die etwa parallel zur Drehachse (85) des Sensormagneten (82) verläuft.

12. Elektromotor nach einem der vorhergehenden Ansprüche, bei welchem die analogen Magnetfeldsensoren (450, 455, 460, 465) derart angeordnet sind, dass die von ihnen im Betrieb erzeugten Rotorstellungssignale (B_S1, B_ S2) eine Phasendifferenz von etwa 90° aufweisen.

13. Elektromotor nach einem der vorhergehenden Ansprüche, bei welchem die analogen Magnetfeldsensoren (450, 455, 460, 465) derart auf der Sensorebene (469) angeordnet sind, dass die Rotorstellungssignale (B_S1, B_S2) eine Phasendifferenz aufweisen, welche ungleich 90° ist, und bei welchem die Auswertevorrichtung (32) dazu ausgebildet ist, aus diesen Rotorstellungssignalen einen Absolutwert (phi_el, phi_mech) zu erzeugen.

14. Elektromotor nach einem der vorhergehenden Ansprüche, bei welchem die analogen Magnetfeldsensoren (450, 455, 460, 465) zur Ausgabe von mehr als zwei Werten ausgebildet sind.

15. Elektromotor nach einem der vorhergehenden Ansprüche, bei welchem den analogen Magnetfeldsensoren (450, 455, 460, 465) jeweils ein A/D-Wandler zugeordnet ist, um den erfassten Wert als digitalen Wert auszugeben.

16. Elektromotor nach einem der vorhergehenden Ansprüche, bei welchem die Rotorstellungssensoren (450, 455, 460, 465) eine lineare Charakteristik aufweisen.

17. Elektromotor nach einem der vorhergehenden Ansprüche, dessen Rotor (14) einen Rotormagneten (13) mit einer Anzahl RP von Rotorpolen aufweist, welcher Rotormagnet mit dem Stator (12) in Wechselwirkung steht und bei welchem die Zahl der Sensorpole kleiner oder gleich der Zahl der Rotorpole ist.

18. Elektromotor nach Anspruch 17, bei welchem der Absolutwert für jede Stellung des Rotors (14) innerhalb einer elektrischen Umdrehung des Rotormagneten (13) eindeutig ist.

19. Elektromotor nach Anspruch 17 oder 18, bei welchem der Sensormagnet (82) gleichzeitig der Rotormagnet (13) ist und bei welchem gilt: SP = RP.

20. Elektromotor nach einem der vorhergehenden Ansprüche, bei welchem SP = 2 ist, und bei welchem der Absolutwert der erfassten Drehstellung für jede Stellung des Rotors (14) innerhalb einer vollen mechanischen Umdrehung eindeutig ist.

21. Elektromotor nach einem der vorhergehenden Ansprüche, bei welchem die Zahl der Sensorpole größer als zwei ist, und bei welchem die Auswertevorrichtung (32, 44) dazu ausgebildet ist, aus den Rotorstellungssignalen (B_S1, B_ S2) einen Drehwinkelwert zu erzeugen, der für jede Stellung des Rotors (14) innerhalb einer vollen mechanischen Umdrehung eindeutig ist.

22. Elektromotor nach einem der vorhergehenden Ansprüche, bei welchem der Auswertevorrichtung (32) ein nichtflüchtiger Speicher (34) zugeordnet ist, in welchem von der Anordnung der Rotorstellungssensoren (450, 455, 460, 465) abhängige Hilfswerte (AUX_VAL) für die Auswertevorrichtung (40, 42, 44) gespeichert sind.

23. Elektromotor nach Anspruch 22, bei welchem ein Hilfswert (AUX_VAL) gespeichert ist, der eine Korrektur des Absolutwerts (phi_el, phi_mech) derart ermöglicht, dass dieser bei einem Polwechsel (84) des Rotormagneten (13) einen vorgegebenen Wert aufweist.

24. Elektromotor nach einem der vorhergehenden Ansprüche, welcher einen Mikroprozessor (32) aufweist, welcher zumindest einen Teil der Auswertevorrichtung (40, 42, 44) bildet.

25. Elektromotor nach einem der vorhergehenden Ansprüche, bei wekhem die Rotorstellungssensoren (450, 455, 460, 465) als Hallsensoren ausgebildet sind.

26. Elektromotor nach einem der vorhergehenden Ansprüche, welcher dazu ausgebildet ist, nach dem Einschalten bereits vor einer Drehung des Rotors (14) einen Absolutwert für die Rotorstellung zu liefern.

27. Lüfter mit einem Elektromotor nach einem der vorhergehenden Ansprüche.

28. Verfahren zur Erzeugung eines Drehwinkel-Absolutwerts bei einem Elektromotor, welcher Elektromotor aufweist:

Einen Rotor (13), der auf einer um eine Drehachse (85) drehbaren Welle (87) angeordnet ist,
einen diesem Rotor (14) zugeordneten Stator (12) mit einer dreiphasigen Antriebswicklung,
einen Absolutwert-Drehwinkelsensor zur drehwinkelabhängigen Steuerung der Ströme in der dreiphasigen Antriebswicklung, welcher Drehwinkelsensor (46) aufweist:

Einen auf der drehbaren Welle (87) angeordneten und zusammen mit dieser um deren Drehachse (85) drehbaren Sensormagneten (82), welcher eine geradzahlige Zahl von mindestens zwei Sensor-Magnetpolen (71, 72, 73, 74) aufweist, die zur Erzeugung eines drehwinkelabhängigen Magnetflusses (88) mit etwa sinusförmigem Verlauf ausgebildet sind;
eine Auswertevorrichtung (32) zur Erzeugung eines Absolutwerts (phi_el, phi_mech) für den jeweiligen Drehwinkel (phi) des Rotors (14) aus den Ausgangssignalen (B_S1, B_S2) von zwei analogen Magnetfeldsensoren (460, 465), von denen jeder eine für den Magnetfluss sensitive Fläche (462, 467) aufweist, und welche in einem vorgegebenen Abstand ($A_S$) voneinander im Bereich dieses drehwinkelabhängigen Magnetflusses (88) und so angeordnet sind, dass die Normale (461, 466) auf der sensitiven Fläche (462, 467) eines Magnetfeldsensors die Drehachse (85) des Sensormagneten (82) nicht schneidet,

mit folgenden Schritten:

A) In der sensitiven Fläche (462, 467) des betreffenden Magnetfeldsensors (460, 465) wird eine vektorielle Komponente des dort wirksamen Magnetflusses (B) erfasst, welche vektorielle Komponente in Richtung der bei diesem Magnetfeldsensor (460, 465) vorhandenen Normalen (461) verläuft, um an dem betreffenden Magnetfeldsensor ein Rotorstellungssignal (B_S1, B_S2) zu erzeugen, welches Betrag und Vorzeichen der erfassten vektoriellen Komponente charakterisiert;
B) die Rotorstellungssignale (B_S1, B_S2) von zwei Magnetfeldsensoren (460, 465) werden der Auswertevorrichtung (32) zugeführt;
C) in der Auswertevorrichtung (32) wird in Abhängigkeit von diesen Rotorstellungssignalen (B_S1, B_S2) ein Absolutwert (phi_el, phi_mech) für den jeweiligen Drehwinkel des Rotors (14) erzeugt.

29. Verfahren nach Anspruch 28, bei welchem mit den analogen Magnetfeldsensoren (460, 465) Rotorstellungssignale (B_S1, B_S2) erzeugt werden, welche abhängig von der Größe einer tangentialen Komponente (B_t) der magnetischen Flussdichte sind, welche auf den betreffenden Sensor einwirkt.

30. Verfahren nach Anspruch 29, bei welchem mit den Rotorstellungssensoren (460, 465) Rotorstellungssignale (B_S1, B_S2) erzeugt werden, welche abhängig von einer Superposition der tangentialen Komponente (B_t) und der radialen Komponente (B_r) der magnetischen Flussdichte sind.

31. Verfahren nach einem der Ansprüche 28 bis 30, bei welchem mit den Rotorstellungssensoren (460, 465) etwa sinusförmige Rotorstellungssignale (B_S1, B_S2) erzeugt werden.

32. Verfahren nach einem der Ansprüche 28 bis 31, bei welchem zur Bestimmung des Drehstellungs-Absolutwerts eine Berechnung nach Art einer Superposition der Rotorstellungssignale erfolgt.

33. Verfahren nach einem der Ansprüche 28 bis 32, bei welchem mit den Rotorstellungssensoren (460, 465) Rotorstellungssignale (B_S1, B_S2) erzeugt werden, deren Phasendifferenz (phase_diff) zueinander im Bereich von 0° bis 87° oder von 93° bis 180° liegt.

34. Verfahren nach einem der Ansprüche 28 bis 33, bei welchem mit den Rotorstellungssensoren (460, 465) Rotorstellungssignale (B_S1, B_S2) erzeugt werden, deren Phasendifferenz (phase_diff) zueinander im Bereich von 0° bis 83° oder von 97° bis 180° liegt.

35. Verfahren nach einem der Ansprüche 28 bis 34, bei welchem mit den Rotorstellungssensoren (460, 465) Rotorstellungssignale (B_S1, B_S2) erzeugt werden, deren Phasendifferenz (phase_diff) zueinander im Bereich von 0° bis 80° oder von 100° bis 180° liegt.

36. Verfahren nach einem der Ansprüche 28 bis 35, bei welchem die Rotorstellungssignale (B_S1) vor der Erzeugung des Drehstellungs-Absolutwerts (phi_el, phi_mech) normiert werden.

37. Verfahren nach einem der Ansprüche 28 bis 36, für einen Rotor (14) mit einem Rotormagneten (13), der eine vorgegebene Zahl (RP) von Rotorpolen hat,
bei welchem Verfahren der Drehstellungs-Absolutwert (phi_el) derart erzeugt wird, dass er für jede Drehstellung des Rotors (14) innerhalb einer elektrischen Umdrehung des Rotormagneten (13) eindeutig ist.

38. Verfahren nach Anspruch 37, bei welchem der Drehstellungs-Absolutwert (phi_mech) derart erzeugt wird, dass er für jede Drehstellung des Rotors (14) innerhalb einer mechanischen Umdrehung eindeutig ist.

39. Verfahren nach Anspruch 37 oder 38, bei welchem nach dem Einschalten des Elektromotors bereits vor einer Drehung des Rotors (14) ein Drehstellungs-Absolutwert (phi_el, phi_mech) erzeugt wird.

40. Verfahren nach einem der Ansprüche 28 bis 39, bei welchem der Drehstellungs-Absolutwert (phi_el, phi_mech) über eine Datenleitung (47,49) ausgegeben wird.

41. Verfahren nach einem der Ansprüche 28 bis 40, bei welchem in einem nichtflüchtigen Speicher (34) mindestens ein Hilfswert (AUX_VAL) für die Auswertevorrichtung (32) gespeichert wird,
und der Drehstellungs-Absolutwert (phi_el, phi_mech) in Abhängigkeit von den Rotorstellungssignalen (B_S1, B_S2) und dem mindestens einen Hilfswert (AUX_VAL) erzeugt wird.

42. Verfahren nach Anspruch 41, bei welchem der mindestens eine Hilfswert (AUX_VAL) abhängig von der Art des Sensormagneten (82) ist.

43. Verfahren nach Anspruch 42, bei welchem der mindestens eine Hilfswert (AUX_VAL) durch ein Computerprogramm erzeugt wird, das Werte für die magnetische Flussdichte des Sensormagneten (82) enthält.

44. Verfahren nach Anspruch 43, bei welchem die Werte für die magnetische Flussdichte des Sensormagneten (82) getrennt für die Radial- und Tangentialkomponenten angegeben werden.

45. Verfahren nach einem der Ansprüche 41 bis 44, bei welchem der mindestens eine Hilfswert (AUX_VAL) bei der Herstellung des Elektromotors ermittelt und gespeichert wird.

46. Verfahren nach einem der Ansprüche 40 bis 45, bei welchem der mindestens eine Hilfswert (AUX_VAL) vor der Auslieferung des Elektromotors ermittelt und gespeichert wird.

47. Verfahren nach einem der Ansprüche 40 bis 46, bei welchem der mindestens eine Hilfswert (AUX_VAL) gegen Änderung durch den Kunden geschützt wird.

48. Verfahren nach einem der Ansprüche 40 bis 47, bei welchem der mindestens eine Hilfswert (AUX_VAL) abhängig vom Motortyp festgelegt wird.

49. Verfahren nach einem der Ansprüche 40 bis 48, bei welchem der mindestens eine Hilfswert (AUX_VAL) für den Elektromotor durch Messung ermittelt wird.

50. Verfahren nach einem der Ansprüche 40 bis 49, bei welchem der mindestens eine Hilfswert (AUX_VAL) durch Messung des Nulldurchgangs einer in einem Strang des Stators (12) induzierten Spannung ermittelt wird, um eine zuordnung des ermittelten Absolutwerts zur Drehung des Rotormagneten (13), der mit dem Stator (12) in Wechselwirkung steht, zu ermöglichen.

51. Verfahren nach einem der Ansprüche 40 bis 50, bei welchem der mindestens eine Hilfswert (AUX_VAL) durch Erfassung der Lage der Rotorstellungssensaren (450, 455, 460, 465) ermittelt wird.

**Claims**

1. Electric motor (10) with a rotor (13), which is arranged on a shaft (87) which can rotate around an axis of rotation (85), and with a stator (12) which is assigned to this rotor (14), with a three-phase drive winding, also with an absolute value angle of rotation sensor (46) for control, depending on the angle of rotation, of the currents in the three-phase drive winding, said angle of rotation sensor (46) having:

   a sensor magnet (82) which is arranged on the rotatable shaft (87), and together with it can rotate around its axis of rotation (85), and which has an even number of at least two sensor magnetic poles (71, 72, 73, 74) which are in a form to generate a magnetic flux (88) which depends on the angle of rotation, with an approximately sinusoidal course;

   and an analysis device (32) to generate an absolute value (phi_el, phi_mech) for the appropriate angle of rotation (phi) of the rotor (14) from the output signals (B_S1, B_S2) of two analogue magnetic field sensors (460, 465), each of which has a surface (462, 467) which is sensitive to magnetic flux, and which are arranged at a specified distance (As) from each other in the region of this magnetic flux (88) which depends on the angle of rotation, and so that the normal (461, 466) on the sensitive surface (462, 467) of a magnetic field sensor does not intersect the axis of rotation (85) of the sensor magnet (82);

   so that in the sensitive surface (462, 467) of the relevant magnetic field sensor (460, 465), a vectorial component of the magnetic flux (8) which is effective there is captured, which vectorial component runs in the direction of the normal (461) which is present for this magnetic field sensor (460, 465), to generate a rotor position signal (B_S1, B_S2), which characterizes the amount and sign of the captured vectorial component, at the appropriate magnetic field sensor.

2. Electric motor according to Claim 1, wherein the surfaces (462, 467), which are sensitive to magnetic flux, of the two magnetic field sensors (460, 465) are arranged in approximately the same plane (469).

3. Electric motor according to Claim 1 or 2, wherein the two magnetic field sensors (460, 465) are arranged at the specified distance ($A_S$) from each other on a printed circuit board (468).

4. Electric motor according to one of the preceding claims, wherein the sensor magnet (82) is magnetised pole-orientedly.

5. Electric motor according to one of the preceding claims, wherein the sensor magnet (82) is magnetised laterally.

6. Electric motor according to one of the preceding claims, wherein the sensor magnet (82) is in the form of part of a sensor magnet ring (69), which sensor magnet ring (69) is arranged on the shaft (87) of the rotor (14).

7. Electric motor according to Claim 6, wherein the sensor magnet ring (69) has an elastic region (109) which is arranged between the shaft (87) and the sensor magnet (72).

8. Electric motor according to Claim 7, wherein the elastic region (109) consists of a plastic.

9. Electric motor according to Claim 7 or 8, wherein between the elastic region (10) and the shaft (87), a metal ring (87) is arranged.

10. Electric motor according to one of the preceding claims, wherein the two analogue magnetic field sensors (460, 465) are arranged in a sensor plane (469) which does not run perpendicularly to the axis of rotation (85) of the sensor magnet (82).

11. Electric motor according to one of the preceding claims, wherein the two analogue magnetic field sensors (460, 465) are arranged in a sensor plane (469) which runs approximately parallel to the axis of rotation (85) of the sensor magnet (82).

12. Electric motor according to one of the preceding claims, wherein the analogue magnetic field sensors (450, 455, 460, 465) are arranged so that the rotor position signals (B_S1, B_S2) which they generate in operation have a phase difference of about 90°.

**13.** Electric motor according to one of the preceding claims, wherein the analogue magnetic field sensors (450, 455, 460, 465) are arranged on the sensor plane (469) so that the rotor position signals (B_S1, B_S2) have a phase difference which does not equal 90°, and wherein the analysis device (32) is in a form to generate an absolute value (phi_el, phi_mech) from these rotor position signals.

**14.** Electric motor according to one of the preceding claims, wherein the analogue magnetic field sensors (450, 455, 460, 465) are in a form to output more than two values.

**15.** Electric motor according to one of the preceding claims, wherein an A/D converter is assigned to each of the analogue magnetic field sensors (450, 455, 460, 465), to output the captured value as a digital value.

**16.** Electric motor according to one of the preceding claims, wherein the rotor position sensors (450, 455, 460, 465) have a linear characteristic.

**17.** Electric motor according to one of the preceding claims, the rotor (14) of which has a rotor magnet (13) with a number RP of rotor poles, which rotor magnet interacts with the stator (12), and wherein the number of sensor poles is less than or equal to the number of rotor poles.

**18.** Electric motor according to Claim 17, wherein the absolute value for each position of the rotor (14) is unique within one electrical revolution of the rotor magnet (13).

**19.** Electric motor according to Claim 17 or 18, wherein the sensor magnet (82) is simultaneously the rotor magnet (13), and wherein SP = RP.

**20.** Electric motor according to one of the preceding claims, wherein SP = 2, and wherein the absolute value of the captured rotational position is unique for each position of the rotor (14) within one full mechanical revolution.

**21.** Electric motor according to one of the preceding claims, wherein the number of sensor poles is greater than two, and wherein the analysis device (32, 44) is in a form to generate, from the rotor position signals (B_81, B_S2), an angle of rotation value which is unique for each position of the rotor (14) within one full mechanical revolution.

**22.** Electric motor according to one of the preceding claims, wherein a non-volatile memory (34), in which auxiliary values (AUX_VAL) for the analysis device (40, 42, 44), depending on the arrangement of the rotor position sensors (450, 455, 460, 465), are stored, is assigned to the analysis device (32).

**23.** Electric motor according to Claim 22, wherein correction of the absolute value (phi_el, phi_mech) is made possible by this having a specified value at a pole change (84) of the rotor magnet (13).

**24.** Electric motor according to one of the preceding claims, which has a microprocessor (32) which forms at least part of the analysis device (40, 42, 44).

**25.** Electric motor according to one of the preceding claims, wherein the rotor position sensors (450, 455, 460, 465) are in the form of Hall sensors.

**26.** Electric motor according to one of the preceding claims, which is in a form to supply an absolute value for the rotor position after powerup, before a revolution of the rotor (14).

**27.** Fan with an electric motor according to one of the preceding claims.

**28.** Method of generating an angle of rotation absolute value for an electric motor, which electric motor has:

a rotor (13), which is arranged on a shaft (87) which can rotate around an axis of rotation (85),
a stator (12) which is assigned to this rotor (14), with a three-phase drive winding,
an absolute value angle of rotation sensor for control, depending on the angle of rotation, of the currents in the three-phase drive winding, said angle of rotation sensor (46) having:

a sensor magnet (82) which is arranged on the rotatable shaft (87), and together with it can rotate around its axis of rotation (85), and which has an even number of at least two sensor magnetic poles (71, 72, 73, 74) which are in a form to generate a magnetic flux (88) which depends on the angle of rotation, with an approximately sinusoidal course;

an analysis device (32) to generate an absolute value (phi_el, phi_mech) for the appropriate angle of rotation (phi) of the rotor (14) from the output signals (B_S1, B_S2) of two analogue magnetic field sensors (460, 465), each of which has a surface (462, 467) which is sensitive to magnetic flux, and which are arranged at a specified distance ($A_S$) from each other in the region of this magnetic flux (88) which depends on the angle of rotation, and so that the normal (461, 466) on the sensitive surface (462, 467) of a magnetic field sensor does not intersect the axis of rotation (85) of the sensor magnet (82),

with the following steps:

A) in the sensitive surface (462, 467) of the relevant magnetic field sensor (460, 465), a vectorial component of the magnetic flux (8) which is effective there is captured, which vectorial component runs in the direction of the normal (461) which is present for this magnetic field sensor (460, 465), to generate a rotor position signal (B_S1, B_S2), which characterizes the amount and sign of the captured vectorial component, at the appropriate magnetic field sensor;

B) the rotor position signals (B_S1, B_S2) of two magnetic field sensors (460, 465) are fed to the analysis device (32);

C) in the analysis device (32), depending on these rotor position signals (B_S1, B_S2), an absolute value (phi_el, phi_mech) for the angle of rotation of the rotor (14) is generated.

29. Method according to Claim 28, wherein using the analogue magnetic field sensors (460, 465), rotor position signals (B_S1, B_S2), which depend on the magnitude of a tangential component (B_t) of the magnetic flux density which acts on the relevant sensor, are generated.

30. Method according to Claim 29, wherein using the rotor position sensors (460, 465), rotor position signals (B_S1, B_S2), which depend on a superposition of the tangential component (B_t) and the radial component (B_r) of the magnetic flux density, are generated.

31. Method according to one of Claims 28 to 30, wherein using the rotor position sensors (460, 465), approximately sinusoidal rotor position signals (B_S1, B-S2) are generated.

32. Method according to one of Claims 28 to 31, wherein to determine the rotational position absolute value, a calculation according to the type of a superposition of the rotor position signals takes place.

33. Method according to one of Claims 28 to 32, wherein using the rotor position sensors (460, 465), rotor position signals (B_81, B_S2), the phase difference (phase_diff) of which from each other is in the range from 0° to 87° or from 93° to 180°, are generated.

34. Method according to one of Claims 28 to 33, wherein using the rotor position sensors (460, 465), rotor position signals (B_S1, B_S2), the phase difference (phase_diff) of which from each other is in the range from 0° to 83° or from 97° to 180°, are generated.

35. Method according to one of Claims 28 to 34, wherein using the rotor position sensors (460, 465), rotor position signals (B_S1, B_S2), the phase difference (phase_diff) of which from each other is in the range from 0° to 80° or from 100° to 180°, are generated.

36. Method according to one of Claims 28 to 35, wherein the rotor position signals (B_S1) are normalised before the rotational position absolute value (phi_el, phi_mech) is generated.

37. Method according to one of Claims 28 to 36, for a rotor magnet (13) which has a specified number (RP) of rotor poles, in which method the rotational position absolute value (phi_el) is generated so that for each rotational position of the rotor (14), it is unique within one electrical revolution of the rotor magnet (13).

38. Method according to Claim 37, wherein the rotational position absolute value (phi_mech) is generated so that for each rotational position of the rotor (14), it is unique within one mechanical revolution.

**39.** Method according to Claim 37 or 38, wherein after the electric motor is switched on, before one revolution of the rotor (14), a rotational position absolute value (phi_el, phi_mech) is generated.

**40.** Method according to one of Claims 28 to 39, wherein the rotational position absolute value (phi_el, phi_mech) is output via a data line (47, 49).

**41.** Method according to one of Claims 28 to 40, wherein in a non-volatile memory (34), at least one auxiliary value (AUX_VAL) for the analysis device (32) is stored,
and the rotational position absolute value (phi_el, phi_mech) is generated depending on the rotor position signals (B_S1, B_S2) and the at least one auxiliary value (AUX_VAL).

**42.** Method according to Claim 41, wherein the at least one auxiliary value (AUX_VAL) depends on the type of sensor magnet (82).

**43.** Method according to Claim 42, wherein the at least one auxiliary value (AUX_VAL) is generated by a computer program which contains values for the magnetic flux density of the sensor magnet (82).

**44.** Method according to Claim 43, wherein the values for the magnetic flux density of the sensor magnet (82) are given separately for the radial and tangential components.

**45.** Method according to one of Claims 41 to 44, wherein the at least one auxiliary value (AUX_VAL) is determined and stored during manufacture of the electric motor.

**46.** Method according to one of Claims 40 to 45, wherein the at least one auxiliary value (AUX_VAL) is determined and stored before the electric motor is supplied.

**47.** Method according to one of Claims 40 to 46, wherein the at least one auxiliary value (AUX_VAL) is protected from change by the customer.

**48.** Method according to one of Claims 40 to 47, wherein the at least one auxiliary value (AUX_VAL) is defined depending on the motor type.

**49.** Method according to one of Claims 40 to 48, wherein the at least one auxiliary value (AUX_VAL) for the electric motor is determined by measurement.

**50.** Method according to one of Claims 40 to 49, wherein the at least one auxiliary value (AUX_VAL) is determined by measurement of the zero crossing of a voltage which is induced in a phase of the stator (12), to make it possible to assign the determined absolute value to the rotation of the rotor magnet (13), which interacts with the stator (12).

**51.** Method according to one of Claims 40 to 50, wherein the at least one auxiliary value (AUX_VAL) is determined by capturing the position of the rotor position sensors (450, 455, 460, 465).

**Revendications**

**1.** Moteur électrique (10) comportant un rotor (13) qui est disposé sur un arbre (87) tournant autour d'un axe de rotation (85)
et comportant un stator (12) avec un enroulement d'entraînement triphasé, associé à ce rotor (14),
ainsi que comportant un capteur d'angle de rotation à valeur absolue (46) pour la commande en fonction de l'angle de rotation des courants dans l'enroulement d'entraînement triphasé, lequel capteur d'angle de rotation (46) présente :

un aimant de capteur (82) disposé sur l'arbre tournant (87) et tournant avec celui-ci autour de son axe de rotation (85), lequel aimant de capteur (82) présente un nombre pair d'au moins deux pôles d'aimant de capteur (71, 72, 73, 74) qui sont réalisés pour générer un flux magnétique (88) dépendant de l'angle de rotation et d'allure sensiblement sinusoïdale ;
et un dispositif d'évaluation (32) pour générer une valeur absolue (phi_el, phi_mech) pour l'angle de rotation (phi) respectif du rotor (14) à partir des signaux de sortie (B_S1, B_S2) de deux capteurs de champ magnétique analogiques (460, 465) dont chacun présente une surface sensible au flux magnétique (462, 467) et lesquels sont disposés à une distance prédéfinie ($A_S$) l'un de l'autre dans la région de ce flux magnétique (88) dépendant de l'angle de rotation et de telle manière que la normale (461, 466) à la surface sensible (462, 467) d'un capteur de champ magnétique ne coupe pas l'axe de rotation (85) de l'aimant de capteur (82) ;

de manière que sur la surface sensible (462, 467) du capteur de champ magnétique (460, 465) concerné soit détectée une composante vectorielle du flux magnétique (B) actif à cet endroit, laquelle composante vectorielle s'étend en direction de la normale (461) présente au niveau de ce capteur de champ magnétique (460, 465) pour générer sur le capteur de champ magnétique concerné un signal de position de rotor (B_S1, B_S2) dont la valeur absolue et le signe caractérisent la composante vectorielle détectée.

2. Moteur électrique selon la revendication 1, dans lequel les surfaces sensibles au flux magnétique (462, 467) des deux capteurs de champ magnétique (460, 465) sont disposées approximativement dans le même plan (469).

3. Moteur électrique selon la revendication 1 ou 2, dans lequel les deux capteurs de champ magnétique (460, 465) sont disposés à la distance prédéfinie ($A_S$) l'un de l'autre sur une carte de circuit imprimé (468).

4. Moteur électrique selon l'une des revendications précédentes, dans lequel l'aimant de capteur (82) est magnétisé avec une orientation polaire.

5. Moteur électrique selon l'une des revendications précédentes, dans lequel l'aimant de capteur (82) est magnétisé latéralement.

6. Moteur électrique selon l'une des revendications précédentes, dans lequel l'aimant de capteur (82) est réalisé comme faisant partie d'un aimant de capteur annulaire (69), lequel aimant de capteur annulaire (69) est disposé sur l'arbre (87) du rotor (14).

7. Moteur électrique selon la revendication 6, dans lequel l'aimant de capteur annulaire (69) présente une zone élastique (109) disposée entre l'arbre (87) et l'aimant de capteur (72).

8. Moteur électrique selon la revendication 7, dans lequel la zone élastique (109) présente une matière plastique.

9. Moteur électrique selon la revendication 7 ou 8, dans lequel une bague métallique (87) est disposée entre la zone élastique (10) et l'arbre (87).

10. Moteur électrique selon l'une des revendications précédentes, dans lequel les deux capteurs de champ magnétique analogiques (460, 465) sont disposés dans un plan de capteur (469) qui n'est pas perpendiculaire à l'axe de rotation (85) de l'aimant de capteur (82).

11. Moteur électrique selon l'une des revendications précédentes, dans lequel les deux capteurs de champ magnétique analogiques (460, 465) sont disposés dans un plan de capteur (469) qui est approximativement parallèle à l'axe de rotation (85) de l'aimant de capteur (82).

12. Moteur électrique selon l'une des revendications précédentes, dans lequel les capteurs de champ magnétique analogiques (450, 455, 460, 465) sont disposés de manière que les signaux de position de rotor (B_S1, B_S2) qu'ils génèrent en fonctionnement présentent une différence de phase d'environ 90°.

13. Moteur électrique selon l'une des revendications précédentes, dans lequel les capteurs de champ magnétique analogiques (450, 455, 460, 465) sont disposés dans le plan de capteur (469) de façon que les signaux de position de rotor (B_S1, B_S2) présentent une différence de phase différente de 90°, et dans lequel le dispositif d'évaluation (32) est réalisé pour générer une valeur absolue (phi_el, phi_mech) à partir de ces signaux de position de rotor.

14. Moteur électrique selon l'une des revendications précédentes, dans lequel les capteurs de champ magnétique analogiques (450, 455, 460, 465) sont réalisés pour délivrer plus de deux valeurs.

15. Moteur électrique selon l'une des revendications précédentes, dans lequel un convertisseur A/N est associé à chacun des capteurs de champ magnétique analogiques (450, 455, 460, 465) pour délivrer la valeur détectée sous forme de valeur numérique.

**16.** Moteur électrique selon l'une des revendications précédentes, dans lequel les capteurs de position de rotor (450, 455, 460, 465) présentent une caractéristique linéaire.

**17.** Moteur électrique selon l'une des revendications précédentes, dont le rotor (14) présente un aimant de rotor (13) avec un nombre RP de pôles de rotor, lequel aimant de rotor est en interaction avec le stator (12), et dans lequel le nombre de pôles de capteur est inférieur ou égal au nombre de pôles de rotor.

**18.** Moteur électrique selon la revendication 17, dans lequel la valeur absolue est univoque pour chaque position du rotor (14) au cours d'une rotation électrique de l'aimant de rotor (13).

**19.** Moteur électrique selon la revendication 17 ou 18, dans lequel l'aimant de capteur (82) est en même temps l'aimant de rotor (13) et dans lequel on a : SP = RP.

**20.** Moteur électrique selon l'une des revendications précédentes, dans lequel SP = 2, et dans lequel la valeur absolue de la position de rotation détectée est univoque pour chaque position du rotor (14) au cours d'une rotation mécanique complète.

**21.** Moteur électrique selon l'une des revendications précédentes, dans lequel le nombre de pôles de capteur est supérieur à deux,
et dans lequel le dispositif d'évaluation (32, 44) est réalisé pour générer à partir des signaux de position de rotor (B_S1, B_S2) une valeur d'angle de rotation qui est univoque pour chaque position du rotor (14) au cours d'une rotation mécanique complète.

**22.** Moteur électrique selon l'une des revendications précédentes, dans lequel au dispositif d'évaluation (32) est associée une mémoire non volatile (34) dans laquelle sont enregistrées des valeurs auxiliaires (AUX_VAL) pour le dispositif d'évaluation (40, 42, 44) qui dépendent de la disposition des capteurs de position de rotor (450, 455, 460, 465).

**23.** Moteur électrique selon la revendication 22, dans lequel est enregistrée une valeur auxiliaire (AUX_VAL) qui permet une correction de la valeur absolue (phi_el, phi_mech) de façon que celle-ci présente une valeur prédéfinie lors d'une inversion de polarité (84) de l'aimant de rotor.

**24.** Moteur électrique selon l'une des revendications précédentes, lequel présente un microprocesseur (32) qui forme au moins une partie du dispositif d'évaluation (40, 42, 44).

**25.** Moteur électrique selon l'une des revendications précédentes, dans lequel les capteurs de position de rotor (450, 455, 460, 465) sont réalisés sous la forme de capteurs à effet Hall.

**26.** Moteur électrique selon l'une des revendications précédentes, lequel est réalisé pour, après la mise sous tension, fournir une valeur absolue de la position de rotation avant même une rotation du rotor (14).

**27.** Ventilateur avec un moteur électrique selon l'une des revendications précédentes.

**28.** Procédé pour générer une valeur absolue d'angle de rotation sur un moteur électrique, lequel moteur électrique présente :

un rotor (13) qui est disposé sur un arbre (87) tournant autour d'un axe de rotation (85),
un stator (12) avec un enroulement d'entraînement triphasé, associé à ce rotor (14),
un capteur d'angle de rotation à valeur absolue pour la commande en fonction de l'angle de rotation des courants dans l'enroulement d'entraînement triphasé, lequel capteur d'angle de rotation (46) présente :

un aimant de capteur (82) disposé sur l'arbre tournant (87) et tournant avec celui-ci autour de son axe de rotation (85), lequel aimant de capteur (82) présente un nombre pair d'au moins deux pôles d'aimant de capteur (71, 72, 73, 74) qui sont réalisés pour générer un flux magnétique (88) dépendant de l'angle de rotation et d'allure sensiblement sinusoïdale ;
un dispositif d'évaluation (32) pour générer une valeur absolue (phi_el, phi_mech) pour l'angle de rotation (phi) respectif du rotor (14) à partir des signaux de sortie (B_S1, B_S2) de deux capteurs de champ magnétique analogiques (460, 465) dont chacun présente une surface sensible au flux magnétique (462, 467) et lesquels sont disposés à une distance prédéfinie ($A_S$) l'un de l'autre dans la région de ce flux magnétique (88) dépendant de l'angle de rotation et de telle manière que la normale (461, 466) à la surface sensible (462, 467) d'un capteur de champ magnétique ne coupe pas l'axe de rotation (85) de l'aimant de capteur (82),

présentant les étapes suivantes :

A) sur la surface sensible (462, 467) du capteur de champ magnétique (460, 465) concerné est détectée une composante vectorielle du flux magnétique (B) actif à cet endroit, laquelle composante vectorielle s'étend en direction de la normale (461) présente au niveau de ce capteur de champ magnétique (460, 465) pour générer sur le capteur de champ magnétique concerné un signal de position de rotor (B_S1, B_S2) dont la valeur absolue et le signe caractérisent la composante vectorielle détectée ;
B) les signaux de position de rotor (B_S1, B_S2) de deux capteurs de champ magnétique (460, 465) sont amenés au dispositif d'évaluation (32) ;
C) une valeur absolue (phi_el, phi_mech) pour l'angle de rotation respectif du rotor (14) est générée dans le dispositif d'évaluation (32) en fonction de ces signaux de position de rotor (B_S1, B_S2).

29. Procédé selon la revendication 28, dans lequel avec les capteurs de champ magnétique analogiques (460, 465) sont générés des signaux de position de rotor (B_S1, B_S2) qui dépendent de la grandeur d'une composante tangentielle (B_t) de la densité de flux magnétique qui agit sur le capteur concerné.

30. Procédé selon la revendication 29, dans lequel avec les capteurs de position de rotor (460, 465) sont générés des signaux de position de rotor (B_S1, B_S2) qui dépendent d'une superposition de la composante tangentielle (B_t) et de la composante radiale (B_r) de la densité de flux magnétique.

31. Procédé selon l'une des revendications 28 à 30, dans lequel des signaux de position de rotor (B_S1, B_S2) approximativement sinusoïdaux sont générés avec les capteurs de position de rotor (460, 465).

32. Procédé selon l'une des revendications 28 à 31, dans lequel, pour déterminer la valeur absolue de position de rotation, on effectue un calcul à la manière d'une superposition de signaux de position de rotor.

33. Procédé selon l'une des revendications 28 à 32, dans lequel avec les capteurs de position de rotor (460, 465) sont générés des signaux de position de rotor (B_S1, B_S2) dont la différence de phase (phase_diff) entre eux est comprise entre 0° et 87° ou entre 93° et 180°.

34. Procédé selon l'une des revendications 28 à 33, dans lequel avec les capteurs de position de rotor (460, 465) sont générés des signaux de position de rotor (B_S1, B_S2) dont la différence de phase (phase_diff) entre eux est comprise entre 0° et 83° ou entre 97° et 180°.

35. Procédé selon l'une des revendications 28 à 34, dans lequel avec les capteurs de position de rotor (460, 465) sont générés des signaux de position de rotor (B_S1, B_S2) dont la différence de phase (phase_diff) entre eux est comprise entre 0° et 80° ou entre 100° et 180°.

36. Procédé selon l'une des revendications 28 à 35, dans lequel les signaux de position de rotor (B_S1) sont normalisés avant la génération de la valeur absolue de position de rotation (phi_el, phi_mech).

37. Procédé selon l'une des revendications 28 à 36, pour un rotor (14) avec un aimant de rotor (13) qui possède un nombre prédéfini (RP) de pôles de rotor,
dans lequel procédé la valeur absolue de position de rotation (phi_el) est générée de façon à être univoque pour chaque position du rotor (14) au cours d'une rotation électrique de l'aimant de rotor (13).

38. Procédé selon la revendication 37, dans lequel la valeur absolue de position de rotation (phi_mech) est générée de façon à être univoque pour chaque position du rotor (14) au cours d'une rotation mécanique.

39. Procédé selon la revendication 37 ou 38, dans lequel, après la mise sous tension, une valeur absolue de position de rotation (phi_el, phi_mech) est générée avant même une rotation du rotor (14).

40. Procédé selon l'une des revendications 28 à 39, dans lequel la valeur absolue de position de rotation (phi_el, phi_mech) est délivrée via une ligne de données (47, 49).

**41.** Procédé selon l'une des revendications 28 à 40, dans lequel au moins une valeur auxiliaire (AUX_VAL) pour le dispositif d'évaluation (32) est enregistrée dans une mémoire non volatile (34),
et la valeur absolue de position de rotation (phi_el, phi_mech) est générée en fonction des signaux de position de rotor (B_S1, B_S2) et de ladite au moins une valeur auxiliaire (AUX_VAL).

**42.** Procédé selon la revendication 41, dans lequel ladite au moins une valeur auxiliaire (AUX_VAL) dépend du type de l'aimant de capteur (82).

**43.** Procédé selon la revendication 42, dans lequel ladite au moins une valeur auxiliaire (AUX_VAL) est générée par un programme informatique qui contient des valeurs de la densité de flux magnétique de l'aimant de capteur (82).

**44.** Procédé selon la revendication 43, dans lequel les valeurs de la densité de flux magnétique de l'aimant de capteur (82) sont indiquées séparément pour les composantes radiales et tangentielles.

**45.** Procédé selon l'une des revendications 41 à 44, dans lequel ladite au moins une valeur auxiliaire (AUX_VAL) est déterminée et enregistrée lors de la fabrication du moteur électrique.

**46.** Procédé selon l'une des revendications 40 à 45, dans lequel ladite au moins une valeur auxiliaire (AUX_VAL) est déterminée et enregistrée avant la livraison du moteur électrique.

**47.** Procédé selon l'une des revendications 40 à 46, dans lequel ladite au moins une valeur auxiliaire (AUX_VAL) est protégée contre une modification par le client.

**48.** Procédé selon l'une des revendications 40 à 47, dans lequel ladite au moins une valeur auxiliaire (AUX_VAL) est définie en fonction du type de moteur.

**49.** Procédé selon l'une des revendications 40 à 48, dans lequel ladite au moins une valeur auxiliaire (AUX_VAL) est déterminée par mesure pour le moteur électrique.

**50.** Procédé selon l'une des revendications 40 à 49, dans lequel ladite au moins une valeur auxiliaire (AUX_VAL) est déterminée par mesure du passage par zéro d'une tension induite dans une phase du stator (12) pour permettre une affectation de la valeur absolue déterminée à la rotation de l'aimant de rotor (13) qui est en interaction avec le stator (12).

**51.** Procédé selon l'une des revendications 40 à 50, dans lequel ladite au moins une valeur auxiliaire (AUX_VAL) est déterminée par détection de la position des capteurs de position de rotor (450, 455, 460, 465).

**Fig. 1**

EP 1 907 798 B1

88A

460

460S

B

B_S1

B_t

461

Fig. 1A

88A

460'

460S

B

B_S1'

B_t'

461

Fig. 1B

## Fig. 2

# Fig. 3

**a.)**

102

103

**b.)**

B

101                    101

| 0° | 90° | 180° | 270° | 360° | mech. |
| 0° | 180° | 0° | 180° | 0° | elektr. |

# Fig. 4

**a.)**

**b.)**

## Fig. 5

## Fig. 6

# Fig. 7

## Fig. 8

GET_phi — S300

MEASURE B_S1
MEASURE B_S2 — S302

B_S1_NORM : = STANDARDIZE B_S1 — S304
B_S2_NORM : = STANDARDIZE B_S2

phi_calc : = f( B_S1_NORM, B_S2_NORM, AUX_VAL ) — S306

phi_rotor : = phi_calc + Delta_phi — S308

END — S310

# Fig. 9

# Fig. 10

**B_S2_NORM**
**B_S1_NORM,**

# Fig. 11

## Fig. 12

# Fig. 13

## Fig. 14

B_S2  B_S1  phase_shift

## Fig. 15

phi_calc  402

phi_calc,
402

φ

## Fig. 16

B_S2    B_S1

## Fig. 17

phi_calc'

405
407
409

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004001341 A1
- DE 102005002830 A1
- EP 1016852 A
- US 5880683 A